# EUROPEAN PATENT SPECIFICATION

(11) **EP 2 972 087 B1**
(45) Date of publication and mention of the grant of the patent: **30.01.2019**
(21) Application number: 14765764.7
(22) Date of filing: 11.03.2014
(51) Int. Cl.: G01C 21/00, G08G 1/0969, G09B 29/00, G01C 21/36, G01C 21/34, G06T 11/00

(54) **NAVIGATION SYSTEM WITH DYNAMIC UPDATE MECHANISM AND METHOD OF OPERATION THEREOF**
NAVIGATIONSSYSTEM MIT DYNAMISCHEM AKTUALISIERUNGSMECHANISMUS UND VERFAHREN ZUM BETRIEB DAVON
SYSTÈME DE NAVIGATION AYANT UN MÉCANISME DE MISE À JOUR DYNAMIQUE ET SON PROCÉDÉ DE FONCTIONNEMENT

(30) Priority: 14.03.2013 US 201361783517 P; 11.10.2013 US 201314052577
(43) Date of publication of application: 20.01.2016
(73) Proprietor: Samsung Electronics Co., Ltd., Gyeonggi-do 16677 (KR)
(72) Inventor: WU, Yun, San Francisco, California 94158 (US); TAN, Nastasha, Torrance, California 90505 (US); SHIH, Nina, Mountain View, California 94043 (US)
(74) Representative: HGF Limited
(86) International application number: PCT/KR2014/001982
(87) International publication number: WO 2014/142502

(56) References cited:
- WO-A1-2011/100535
- KR-A- 20110 134 177
- KR-A- 20120 049 058
- KR-A- 20120 059 239
- KR-A- 20120 080 760
- US-A1- 2007 276 595
- US-A1- 2011 141 141
- US-A1- 2011 279 453
- US-A1- 2012 059 720
- US-B1- 6 871 144

## Description

### [Technical Field]

An embodiment of the present invention relates generally to a navigation system, and more particularly to a system for update.

### [Background Art]

Modern portable consumer and industrial electronics provide increasing levels of functionality to support modern life including location-based services. This is especially true for client devices such as navigation systems, cellular phones, portable digital assistants, and multifunction devices.

The navigation systems generally provide a recommended route from a starting point to a desired destination. Generally, the starting point and the desired destination are selected from a large database of roads stored in mass media storage, such as a compact disc read-only memory (CD ROM) or a hard drive, which includes roads of an area to be traveled by a user.

As users adopt mobile location-based service devices, new and old usage begin to take advantage of this new device space. Navigation system and service providers are continually making improvements to enhance the user's experience in order to be competitive.

Thus, a need still remains for a navigation system with dynamic update mechanism. In view of the ever-increasing commercial competitive pressures, along with growing consumer expectations and the diminishing opportunities for meaningful product differentiation in the marketplace, it is critical that answers be found for these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

US2012/059720 A1 concerns a navigation system comprising a processor, a geographic database and a guidance application executable on the processor. The guidance application obtains data from the geographic database and obtains a photographic image. The guidance application overlays an advertisement route highlight on said photographic image. The advertisement route highlight graphically illustrates a path corresponding to a route and a direction of travel for the route. The advertisement route highlight includes a series of advertisement decals.

US2011/141141 A1 concerns an approach for correlating and navigating between a live camera image and a prerecorded panoramic image. A mapping and augmented reality application correlates at least one live image with a prerecorded panoramic image, when a location of a device used to capture the at least one live image matches a location of a device used to capture the panoramic prerecorded image. The mapping and augmented reality application causes, at least in part, automatically alternating presentation on a screen of the device capturing the at least one live image, of the at least one live image and the prerecorded panoramic image.

WO2011/100535 A1 concerns user pointing of a handheld communication device to capture and display a real-time video stream. The handheld communication device detects geographic position, camera direction, and tilt of the image capture device. The user sends a search request to a server for nearby points of interest. The handheld communication device receives search results based on the search request, geographic position, camera direction, and tilt of the handheld communication device. The handheld communication device visually augments the captured video stream with data related to each point of interest. The user then selects a point of interest to visit. The handheld communication device visually augments the captured video stream with a directional map to a selected point of interest in response to the user input

US6871144B1 concerns a portable GPS unit communicating over a wireless radio network with at least one other such unit. The unit may transmit radio signals over the network indicative of the unit's location and receive similar radio signals from the other units. The unit is operable to calculate and display a route that may be followed to go to a moving waypoint such as one of the other units.

### [Disclosure]

### [Technical Solution]

An embodiment of the present invention provides a navigation system comprising: a location unit configured to calculate a current location for locating a device; a control
unit configured to: select a remote target; determine a local navigation route from the current location to a remote location of the remote target for following the remote target; and generate a local augmented reality image with the local navigation route associated with the remote target for displaying on the device.

### Advantageous Effects of Invention

An embodiment of the present invention generates the local augmented reality image providing improved navigation efficiency for users following the remote target by providing bird's eye view with the local augmented reality image using real images thereby eliminating a chance of the users getting lost. The local augmented reality image also provides safety since the remote target does not have to pay attention to the users behind when a group of users are travelling together in a group. Thus, the remote target is able to focus on driving. The local augmented reality image also provides safety to users following the remote target since the users are also able to focus on driving.

### Brief Description of Drawings

FIG. 1 is a navigation system with dynamic update mechanism in an embodiment of the present invention.
FIG. 2 is a first example of a display on a display interface of the first device.
FIG. 3 is a second example of the display on the display interface of the first device.
FIG. 4 is a third example of the display on the display interface of the first device.
FIG. 5 is a fourth example of the display on the display interface of the first device.
FIG. 6 is a fifth example of the display on the display interface of the third device.
FIG. 7 is a sixth example of the display on the display interface of the first device.
FIG. 8 is an exemplary block diagram of the navigation system.
FIG. 9 is a control flow of the navigation system.
FIG. 10 is a detailed control flow of the navigation module.
FIG. 11 is a flow chart of a method of operation of the navigation system of FIG. 1 in a further embodiment of the present invention.

### Best Mode for Carrying out the Invention

An embodiment of the present invention provides navigation system, including: a location unit configured to calculate a current location for locating a device; a control unit configured to: select a remote target; determine a local navigation route from the current location to a remote location of the remote target for following the remote target; and generate a local augmented reality image with the local navigation route associated with the remote target for displaying on the device..

An embodiment of the present invention provides method of operation of a navigation system including: selecting a remote target; calculating a current location for locating a device; determining a local navigation route from the current location to a remote location of the remote target for following the remote target; and generating a local augmented reality image with the local navigation route associated with the remote target for displaying on the device.

An embodiment of the present invention provides a non-transitory computer readable medium including: selecting a remote target; calculating a current location for locating a device; determining a local navigation route from the current location to a remote location of the remote target for following the remote target; and generating a local augmented reality image with the local navigation route associated with the remote target for displaying on the device.

Some embodiments of the method comprise generating the local augmented reality image includes generating the local augmented reality image based on the current location.

Some embodiments of the method further comprise generating a remote augmented reality image of the remote location.

Some embodiments of the method comprise selecting the remote target includes selecting the remote target based on a share setting.

Some embodiments of the method further comprise generating a follow notification for indicating the remote target is being followed.

Some embodiments of the method comprise generating the local augmented reality image includes generating the local augmented reality image with a path signage layer and the local navigation route associated with the remote target.

Some embodiments of the method comprise generating the local augmented reality image includes generating the local augmented reality image based on the current location with an augmented reality mode selected.

Some embodiments of the method further comprise generating a remote augmented reality image of the remote location, the remote augmented reality image having a remote overlay path.

Some embodiments of the method comprise selecting the remote target includes selecting the remote target based on a share setting and a preference.

Some embodiments of the method further comprise generating an audible follow notification for indicating the remote target is being followed.

Certain embodiments of the invention have other steps or elements in addition to or in place of those mentioned above. The steps or elements will become apparent to those skilled in the art from a reading of the following detailed description when taken with reference to the accompanying drawings.

### Mode for the Invention

An embodiment of the present invention generates the local augmented reality image providing improved navigation efficiency for users following the remote target by providing bird's eye view with the local augmented reality image using real images thereby eliminating a chance of the users getting lost. The local augmented reality image also provides safety since the remote target does not have to pay attention to the users behind when a group of users are travelling together in a group. Thus, the remote target is able to focus on driving. The local augmented reality image also provides safety to users following the remote target since the users are also able to focus on driving.

An embodiment of the present invention provides the local navigation route associated with the remote target dynamically updated in real-time provides safety since the drivers can focus on the roads while following the remote target whose location changes from one place to another.

An embodiment of the present invention provides the local overlay path and the arrows provide safety so that the drivers is able to focus on the roads while following the remote target since the local overlay path and the arrows provide clear turn-by-turn directions. The local overlay path and the arrows prevent mistakes from the drivers of not knowing where they are heading when there are forks in the road and streets that are close to each other.

An embodiment of the present invention provides the local augmented reality image having the cardinal direction provides improved navigation efficiency for users following the remote target.

An embodiment of the present invention selects the remote target based on the preference provides improved efficiency for navigation purposes since the local navigation route and the remote navigation route are effectively calculated based on the preference of users using the first device or the third device.

An embodiment of the present invention provides selects the remote target based on the share setting provides safety since only people who are in each other's contact lists or social network are allowed to follow the remote target.

An embodiment of the present invention performs a selection of the command menu provides improved user interface by providing an option for executing the follow command, the send message command, and the get contact details command in order for the first device and the third device to communicate with each other.

An embodiment of the present invention performs an operation based on a selection of the display menu provides improved user interface by providing an option for generating the navigation map with clear directions based on the satellite mode, the map mode, the traffic mode, or the augmented reality mode.

An embodiment of the present invention performs an operation based on a selection of the transport menu provides improved navigation estimation since the local navigation route and the remote navigation route are calculated based on an actual mode of transport. The actual mode of transport includes the driving method, the public transit method, and the pedestrian method.

An embodiment of the present invention provides the beacon for improved navigation efficiency for the users following the remote target by indicating the remote location where the remote target is thereby eliminating a chance of the users getting lost.

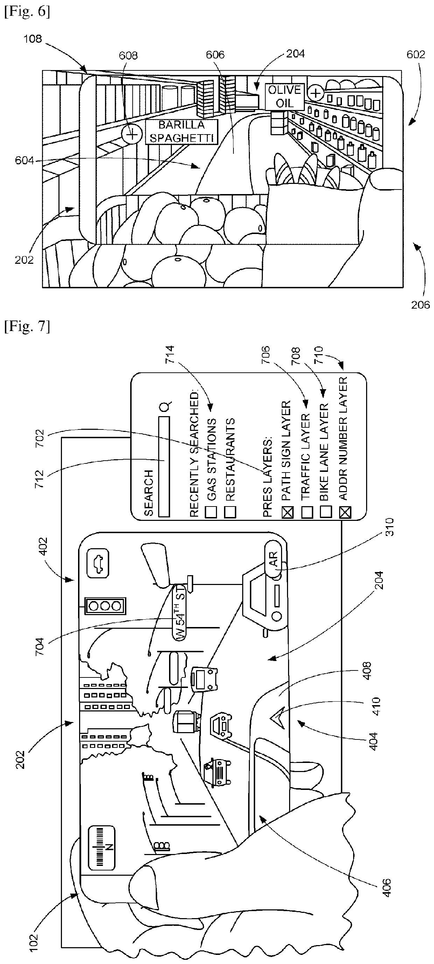

An embodiment of the present invention provides the remote image generation module generating the remote augmented reality image of FIG. 6 provides improved navigation efficiency for the remote target by providing bird's eye view with the remote augmented reality image using real images thereby eliminating a chance of the users getting lost when travelling along the remote navigation route.

An embodiment of the present invention provides the remote overlay path for safety so that the remote target is able to focus on the roads while travelling on the remote navigation route since the remote overlay path provides clear navigation directions. The remote overlay path prevent mistakes from the drivers of not knowing which road to take when there are forks in the road and streets that are close to each other.

An embodiment of the present invention provides the local navigation route and the remote navigation route provide improved navigation guidance since the local navigation route and the remote navigation route are updated periodically in increments of seconds or units less than a second thereby providing a dynamic or real-time guidance. A problem is that existing maps and navigation systems display directions to users only via overlaying lines and turn-by-turn cues for static locations and not to moving points of interests including people using navigation devices. While there are existing navigation systems, such as Google Latitude and Find My Friends application on Apple iOS that display locations of friends and users in a network, another problem is that their locations cannot be routed to. If a person moves to another location, the existing navigation systems are not updated. Thus, the local navigation route and the remote navigation route updated periodically or dynamically solves these problems.

An embodiment of the present invention provides the object indicator and the item notification for safety since the object indicator and the item notification provide users an indication of which physical entities are along the local navigation route or the remote navigation route. As such, the users do not have to manually inquiry and thus are able to stay focus on driving reducing a chance of getting in to an accident.

An embodiment of the present invention provides the presentation layers shown in the local augmented reality image and the remote augmented reality image provides safety since the presentation layers are clearly shown thereby relieving the drivers from manually looking up information while driving. The presentation layers are clearly shown using the path signage layer, the traffic layer, the bike lane layer, and the address number layer.

An embodiment of the present invention provides the search dialog box in the local augmented reality image and the remote augmented reality image provides improved navigation interface since the search dialog box provides an option for the users to conveniently search for the point of interest.

An embodiment of the present invention provides the follow notification provides improved privacy since the remote target is alerted by the follow notification when the remote location is being followed by other users to avoid privacy issues.

An embodiment of the present invention provides the turn notification provides safety so that the drivers are able to focus driving on the roads while following the remote target since the turn notification provides clear indication of when the remote target turns without having the drivers keeping their eyes on the remote target.

An embodiment of the present invention provides the traffic condition6 and the time-based mode8 provides improved calculation of the local navigation route and the remote navigation route since travel paths with accidents or bad traffic conditions are eliminated from calculating the local navigation route and the remote navigation route. A problem is that the navigation systems do not take into account traffic conditions to route and reroute users to their destinations. The local navigation route and the remote navigation route rerouted based on the traffic condition6 and the time-based mode8 solves this problem.

The following embodiments are described in sufficient detail to enable those skilled in the art to make and use an embodiment of the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, an embodiment of the present invention can be operated in any orientation. The embodiments have been numbered first embodiment, second embodiment, etc. as a matter of descriptive convenience and are not intended to have any other significance or provide limitations for an embodiment of the present invention. Where multiple embodiments are disclosed and described having some features in common, for clarity and ease of illustration, description, and comprehension thereof, similar and like features one to another will ordinarily be described with similar reference numerals.

The term "relevant information" referred to herein includes the navigation information described as well as information relating to points of interest to the user, such as local business, hours of businesses, types of businesses, advertised specials, traffic information, maps, local events, and nearby community or personal information.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

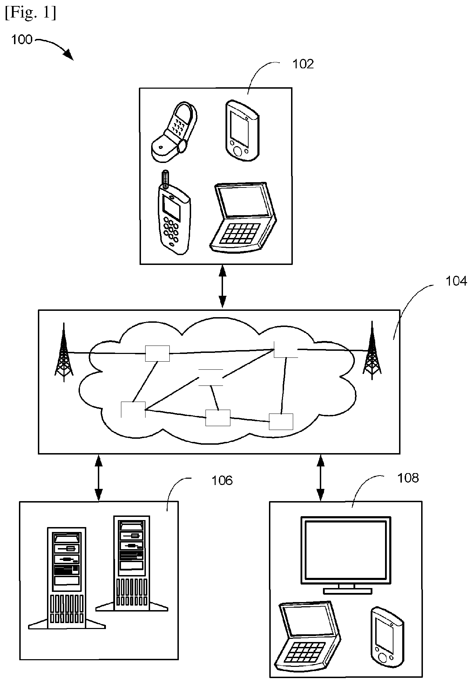

Referring now to FIG. 1, therein is shown a navigation system 100 with dynamic update mechanism in an embodiment of the present invention. The navigation system 100 includes a first device 102, such as a client or a server, connected to a second device 106, such as a client or server, with a communication path 104, such as a wireless or wired network. The navigation system 100 can also include a third device 108 connected to the second device 106 with the communication path 104. The third device 108 can be a client or server.

For example, the first device 102 and the third device 108 can be of any of a variety of mobile devices, such as a cellular phone, personal digital assistant, a notebook computer, automotive telematic content delivery system, or other multi-functional mobile communication or entertainment device. The first device 102 and the third device 108 can be a standalone device, or can be incorporated with a vehicle, for example a car, truck, bus, or train. The first device 102 and the third device 108 can couple to the communication path 104 to communicate with the second device 106.

For illustrative purposes, the navigation system 100 is described with the first device 102 and the third device 108 as a mobile computing device, although it is understood that the first device 102 and the third device 108 can be different types of computing devices. For example, the first device 102 and the third device 108 can also be a non-mobile computing device, such as a server, a server farm, or a desktop computer. For further example, the third device 108 can be a non-mobile computing device, such as a desktop computer, a large format display (LFD), a television (TV) or a computer terminal.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be centralized in a single computer room, distributed across different rooms, distributed across different geographical locations, embedded within a telecommunications network. The second device 106 can have a means for coupling with the communication path 104 to communicate with the first device 102 and the third device 108. The second device 106 can also be a client type device as described for the first device 102.

In another example, the first device 102 and the third device 108 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the second device 106 can be a particularized machine, such as a portable computing device, a thin client, a notebook, a netbook, a smartphone, personal digital assistant, or a cellular phone, and as specific examples, an Apple iPhone (TM), Palm Centro (TM), Samsung Galaxy (TM), or Moto Q Global (TM).

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, or a different type of client device. The second device 106 can be a standalone device, or can be incorporated with a vehicle, for example a car, truck, bus, or train.

Also for illustrative purposes, the navigation system 100 is shown with the second device 106, the third device 108 and the first device 102 as end points of the communication path 104, although it is understood that the navigation system 100 can have a different partition between the first device 102, the third device 108, the second device 106, and the communication path 104. For example, the first device 102, the second device 106, or a combination thereof can also function as part of the communication path 104.

The communication path 104 can be a variety of networks. For example, the communication path 104 can include wireless communication, wired communication, optical, ultrasonic, or the combination thereof. Satellite communication, cellular communication, Bluetooth, Infrared Data Association standard (IrDA), near field communication (NFC), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104.

Further, the communication path 104 can traverse a number of network topologies and distances. For example, the communication path 104 can include direct connection, personal area network (PAN), local area network (LAN), metropolitan area network (MAN), wide area network (WAN) or any combination thereof.

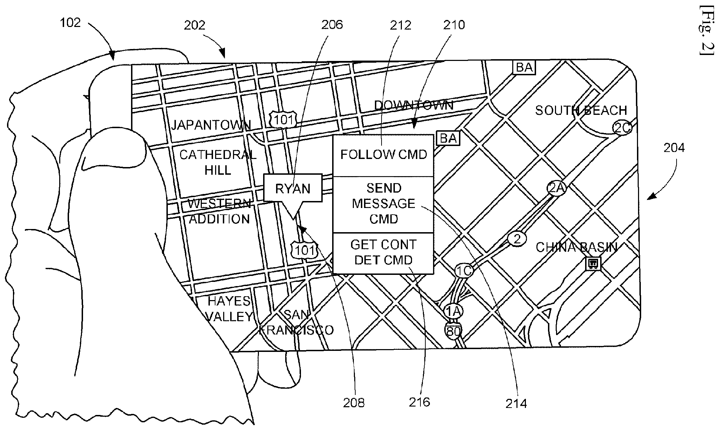

Referring now to FIG. 2, therein is shown a first example of a display on a display interface 202 of the first device 102. The display interface 202 can be provided in the first device 102, the third device 108 of FIG. 1, or a combination thereof. The display interface 202 is defined as an electronic hardware unit that presents the navigation information in a visual form. The display interface 202 can represent a display device, a projector, a video screen, or a combination thereof.

The display interface 202 can present a navigation map 204, which is defined as a representation of a geographical area, for purposes of identifying positions. The display interface 202 can present a remote target 206 at a remote location 208 on the navigation map 204. The remote target 206 is defined as a physical entity whose physical location changes from one geographical location to another geographical location as the physical entity travels along a path. For example, the remote target 206 can represent a physical entity including a moving point of interest. Also for example, the remote target 206 can represent a moving target. The remote location 208 is defined as a geographical location away from a location where the first device 102 is.

For example, the remote target 206, labeled as "Ryan", can represent a physical entity that operates the third device 108. As a specific example, the remote target 206 can represent a person who is using the third device 108 for navigation purposes. As another specific example, the remote target 206 can represent a vehicle with the third device 108 installed therein. As a further specific example, the remote target 206 can represent a parcel or an object, that is transported, with the third device 108 attached thereto for location tracking purposes.

The display interface 202 can present a command menu 210, which is defined as a list of operations to be performed upon selection. For example, the command menu 210 can be presented on the first device 102 for selecting an operation to be performed by the first device 102, the second device 106, the third device 108, or a combination thereof. Also for example, the command menu 210 can include a follow command 212, a send message command 214, and a get contact details command 216.

The follow command 212 is defined as an operation for generating navigation instructions for travelling from a geographical location to another geographical location. For example, the follow command 212 can be invoked for generating navigation instructions for travelling to the remote location 208.

The send message command 214 is defined as an operation for transmitting information from an electronics device to another electronics device. For example, the send message command 214 can be invoked by the first device 102 for transmitting information from the first device 102 to the third device 108.

The get contact details command 216 is defined as an operation for obtaining specific descriptions associated with a physical entity or a point of interest (POI). For example, the get contact details command 216 can be invoked for obtaining specific descriptions associated with the remote target 206.

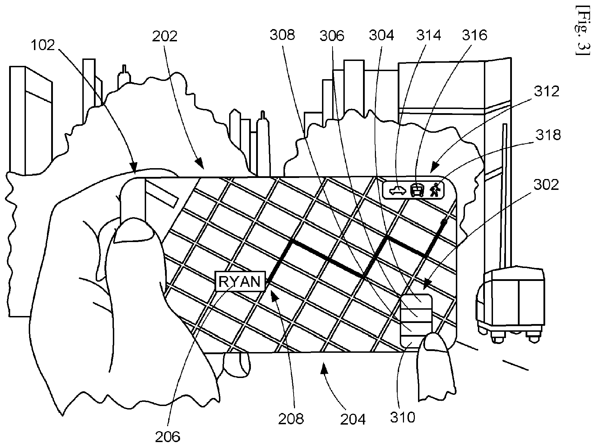

Referring now to FIG. 3, therein is shown a second example of the display on the display interface 202 of the first device 102. The display interface 202 can present the navigation map 204 and the remote target 206, labeled as "Ryan", at the remote location 208 on the navigation map 204.

The display interface 202 can present a display menu 302, which is defined as a list of presentation modes, for presenting the navigation map 204. For example, the display menu 302 can include a satellite mode 304, a map mode 306, a traffic mode 308, and an augmented reality mode 310.

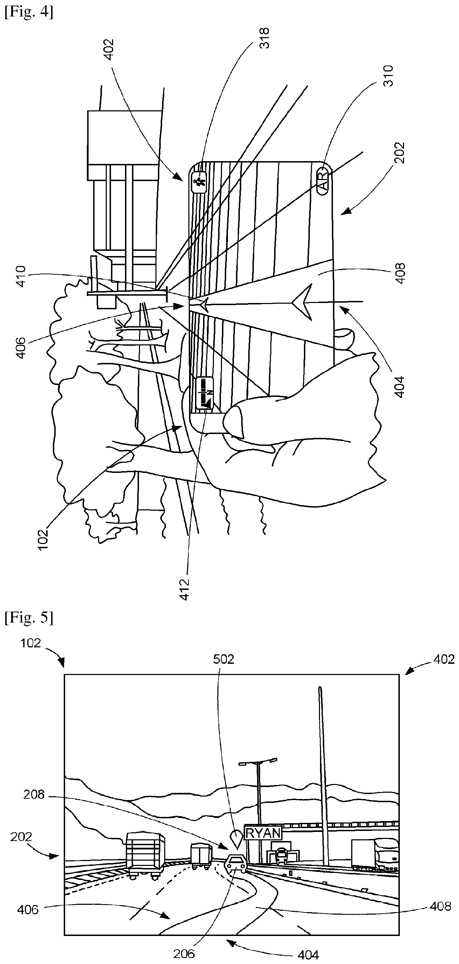

The satellite mode 304 is defined as a selection option for presenting a geographical area as seen from a space above the geographical area to be presented. For example, the satellite mode 304 can be selected for presenting an image of a geographical area at a current location 404 of FIG. 4 as seen by a satellite in orbit.

The map mode 306 is defined as a selection option for presenting a representation of a geographical area. For example, the map mode 306 can be selected for presenting a representation of geographical regions including countries, states, and cities; and bodies of water including ocean, lakes, and rivers. Also for example, the map mode 306 can be selected for presenting a representation of geographical regions including travel paths including freeways, streets, roads, sidewalks, passages such as aisles in a store, and any travel path that leads from one place to another; and points of interest (POIs) including restaurants, gas stations, and parks.

The traffic mode 308 is defined as a selection option for presenting a geographical area with indicators showing how congested certain travel paths or locations are. For example, the traffic mode 308 can be selected for presenting streets highlighted with a number of colors with each color indicating a range of average speeds travelled by vehicles on the streets.

The augmented reality mode 310 is defined as a selection option for presenting real images of a geographical area combined with indicators overlay over the real images. The term "real" refers to something that exists in the physical world. For example, the real images can represent pictures taken by a camera, an image sensor, or a video capture device of an actual place, a street, or people. For example, the augmented reality mode 310 can be selected or initiated for presenting real images of streets and computer generated arrows for providing navigation guidance.

The display interface 202 can present a transport menu 312, which is defined as a list of travel modes. The transport menu 312 can be used to select a travel method for determining a route from a geographical location to another geographical location. For example, the transport menu 312 can include a driving method 314, a public transit method 316, and a pedestrian method 318. Also for example, the transport menu 312 can be used to select a travel method for determining a route from the current location 404 of the first device 102 to the remote location 208 of the remote target 206 operating or attached to the third device 108 of FIG. 1.

The driving method 314 is defined as a mode of travel by a vehicle on land, in air, or in water. For example, the driving method 314 can be selected to determine a route travelled by automobiles.

The public transit method 316 is defined as a mode of travel by shared passenger transportation. For example, the public transit method 316 can include a shared passenger transportation service available for use by the public, as distinct from modes such as taxicab, car-pooling, or hired buses, which are not shared by passengers without private transportation arrangement. Also for example, the public transit method 316 can include publicly available transportation including buses, trolleybuses, trams, trains, ferries, and rapid transits, such as metro, subways, and undergrounds transportations.

The pedestrian method 318 is defined as a mode of travel using feet or a transport mechanism that is different from the driving method 314 and the public transit method 316. For example, the pedestrian method 318 can be selected to determine a route when a user operating the first device 102 wants to walk from the current location 404 of the first device 102 to the remote location 208 of the remote target 206 operating or attached to the third device 108. Also for example, the pedestrian method 318 can be selected to determine a route for a person who is a handicap on a wheelchair.

FIG. 3 is described with the display on the display interface 202 of the first device 102. FIG. 3 also includes a real view at a current location 404 of FIG. 4 where a user using the first device 102 is located. For example, the real view depicts an actual view of a street with buildings, automobiles, and trees, as examples, as the user travels along a road.

Referring now to FIG. 4, therein is shown a third example of the display on the display interface 202 of the first device 102. The display interface 202 can present a local augmented reality image 402, which is defined as a real image of a geographical area with indicators for navigation guidance. The local augmented reality image 402 can be generated based on the current location 404. The local augmented reality image 402 can include a real image of a geographical area at the current location 404 of a user using the first device 102. The local augmented reality image 402 provides a real-time. The current location 404 is defined as a geographical location.

The local augmented reality image 402 can be presented when the augmented reality mode 310 is selected in the display menu 302 of FIG. 3. The local augmented reality image 402 can be presented or displayed on the first device 102.

For illustrative purposes, the local augmented reality image 402 is shown including a ground at the current location 404 when the pedestrian method 318 is selected, although it is understood that the local augmented reality image 402 can include a different real image of the current location 404. For example, the local augmented reality image 402 can include a real image of streets or roads at the current location 404 when the driving method 314 of FIG. 3, the public transit method 316 of FIG. 3, or the pedestrian method 318 is selected.

The local augmented reality image 402 can include a portion of a local navigation route 406, which is defined as a travel path from an origin to a destination, on the first device 102. The portion of the local navigation route 406 can be presented with a local overlay path 408 with arrows 410. For example, the local navigation route 406 can represent a travel path including a real-time navigation route. The local overlay path 408 is defined as a representation of a portion of a geographical area for indicating or highlighting a route for navigation guidance. The local augmented reality image 402 can include the local overlay path 408 using a computer-generated image overlaid over a real image of a geographical area for navigation purposes.

The arrows 410 are defined as signs for indicating which directions to go. For example, the local overlay path 408 and the arrows 410 can represent an overlaid line providing a visual aid showing users turn-by-turn directions in the local augmented reality image 402.

The local augmented reality image 402 provides a visual aid via augmented reality view. For example, FIG. 4 depicts the local augmented reality image 402 with the local overlay path 408 overlays a path on a ground to orient the user to a point of interest. As the user pans, the local overlay path 408 can remain overlaid on the ground within the viewfinder or the display interface 202.

Visual aids via Augmented Reality view within navigation overlays a path on ground to quickly orient the user to their point of interests. As the user pans the path stays on the ground within the viewfinder.

The display interface 202 can present a cardinal direction 412, which is defined as a cardinal point indicating a direction of travel. The cardinal direction 412 can include cardinal points including north (N), east (E), south (S), and west (W), and inter-cardinal points that are between the cardinal points. For example, the cardinal direction 412 can indicate that the user operating the first device 102 is travelling in the North (N) direction. For example, the cardinal direction 412 can represent a cardinal point provided by a compass.

FIG. 4 is described with the display on the display interface 202 of the first device 102. FIG. 4 also includes a real view at the current location 404 where a user using the first device 102 is located. For example, the real view depicts an actual view of a sidewalk as the user travels or walks along a road.

Referring now to FIG. 5, therein is shown a fourth example of the display on the display interface 202 of the first device 102. The display interface 202 can present the local augmented reality image 402 when the augmented reality mode 310 of FIG. 3 is selected in the display menu 302 of FIG. 3. The local augmented reality image 402 can be presented on the first device 102.

The local augmented reality image 402 can include a real image showing the remote target 206, labeled as "Ryan". The local augmented reality image 402 can include a portion of the local navigation route 406 shown with the local overlay path 408 for providing navigation guidance from the current location 404 to the remote location 208.

For example, the local augmented reality image 402 can be a real image as seen by the user operating the first device 102 when the user follows the remote target 206. Also for example, the local augmented reality image 402 can be a real image showing a remote surrounding of a geographical area where the remote target 206 is and is used for navigation purposes to guide the user of the first device 102.

The local augmented reality image 402 can include a beacon 502, which is defined as a sign for navigation purposes. The beacon 502 can represent an intentionally conspicuous sign that is designed to attract attention to a specific geographical location or area. The beacon 502 helps guide navigators to a destination. For example, the beacon 502 can be shown to indicate the remote location 208 where the remote target 206 is.

For illustrative purposes, the beacon 502 is generated to be visually shown in the local augmented reality image 402, although it is understood that the beacon 502 can be generated in a different manner. For example, the beacon 502 can be generated audibly or visually flashing to attract attention to provide a user of the first device 102 an idea of where he or she is heading.

Referring now to FIG. 6, therein is shown a fifth example of the display on the display interface 202 of the third device 108. The display interface 202 can represent a remote augmented reality image 602, which is defined as a real image of a geographical area with indicators for navigation guidance. The remote augmented reality image 602 can include a real image of a geographical area at the remote location 208 of FIG. 2 of a user of the third device 108. The remote augmented reality image 602 can be presented or displayed on the third device 108.

For illustrative purposes, the remote augmented reality image 602 is shown including a ground in an aisle at a grocery store, although it is understood that the remote augmented reality image 602 can include a different real image of the remote location 208. For example, the remote augmented reality image 602 can include a real image of streets or roads at the remote location 208 including surrounding seen by the remote target 206.

The remote augmented reality image 602 can include a portion of a remote navigation route 604, which is defined as a travel path from an origin to a destination, on the third device 108. The portion of the remote navigation route 604 can be presented with a remote overlay path 606. For example, the remote navigation route 604 can represent a travel path including a real-time navigation route. The remote overlay path 606 is defined as a representation of a portion of a geographical area for indicating or highlighting a route for navigation guidance. The remote augmented reality image 602 can include the remote overlay path 606 using a computer-generated image overlaid over a real image of a geographical area for navigation purposes.

The remote navigation route 604 can be dynamically generated by being updated periodically in increments of time. For example, the remote navigation route 604 can be updated in increments of seconds or units less than a second. For a specific example, the remote navigation route 604 can be updated every one to five seconds.

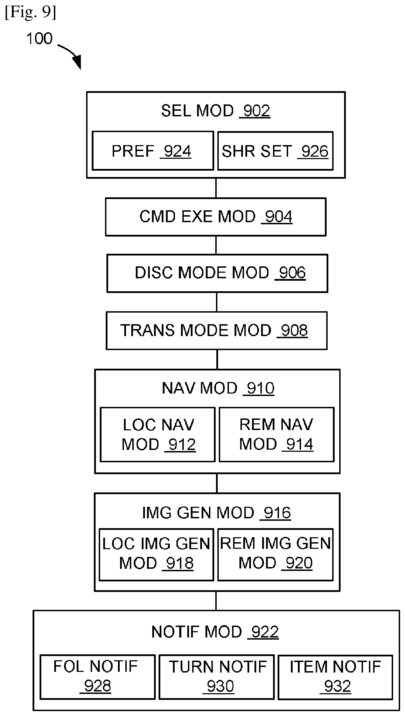

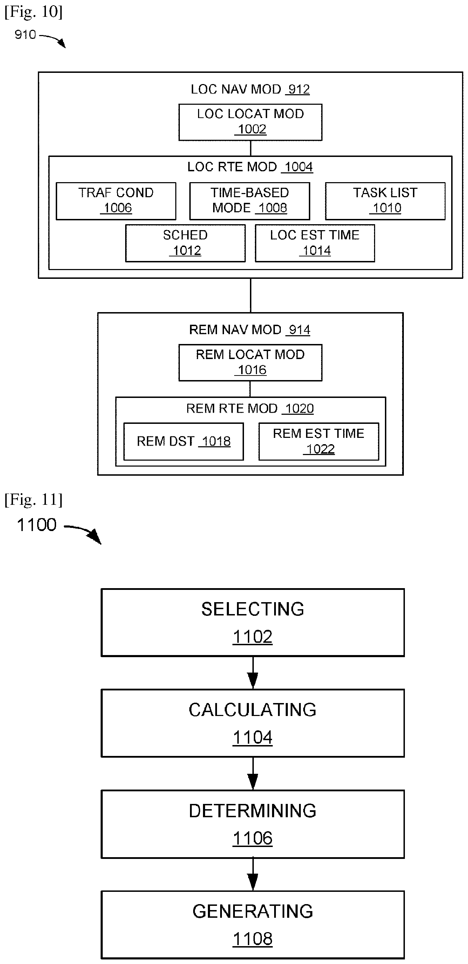

The remote augmented reality image 602 can present an object indicator 608, which is defined as an identification of a physical entity. The object indicator 608 provides information associated with a physical entity that is seen by the remote target 206 at the remote location 208. The object indicator 608 can be presented based on a task list 1010 of FIG. 10, a schedule 1012 of FIG. 10, a calendar, or a preference 924 of FIG. 9. For example, the object indicator 608 can be based on a shopping list when the user of the third device 108 goes shopping at the grocery store.

The object indicator 608 can be generated visually, audibly, or a combination thereof. For example, the object indicator 608 can be visually generated in the remote augmented reality image 602, shown as "BARILLA SPAGHETTI" or "OLIVE OIL" in FIG. 6.

The remote augmented reality image 602 can be sent from the third device 108 to the first device 102 of FIG. 1. For example, when a user using the third device 108 goes shopping, he or she can send the remote augmented reality image 602 to another user using the first device 102 to decide what the user should buy in preparation for a meal.

For example, the navigation map 204 can represent an indoor map of a physical entity including a grocery store. In this example, the navigation map 204 can be pushed, provided, or sent to the third device 108 as the third device 108 approaches the grocery store. The navigation map 204 can be pushed, provided, or sent to the third device 108 via the communication path 104 of FIG. 1 including cloud. As the third device 108 moves away from the grocery store, the navigation map 204 can disappear if the navigation map 204 is not saved to the third device 108.

FIG. 6 is described with the display on the display interface 202 of the third device 108. FIG. 6 also includes a real view at the remote location 208 where a user using the third device 108 is located. For example, the real view depicts an actual view inside a grocery store.

Referring now to FIG. 7, therein is shown a sixth example of the display on the display interface 202 of the first device 102. The display interface 202 can present the local augmented reality image 402 at the current location 404 of a user using the first device 102. For example, examples in FIGs. 2-5 and the sixth example can refer to the user using the first device 102 who would like to follow a user using the third device 108 of FIG. 1.

The local augmented reality image 402 can be presented when the augmented reality mode 310 is selected in the display menu 302 of FIG. 3. The local augmented reality image 402 can be presented on the first device 102. The local augmented reality image 402 can include a portion of the local navigation route 406. The portion of the local navigation route 406 can be presented with the local overlay path 408 with the arrows 410.

The local augmented reality image 402 can include a number of presentation layers 702, which are defined as signs and indicators for purposes of providing information associated with a geographical area. For example, the presentation layers 702 can include a path signage layer 704, a traffic layer 706, a bike lane layer 708, and an address number layer 710.

The path signage layer 704 is defined as sign of a way for travel. For example, the path signage layer 704 can be selected to display names of streets in a geographical area. As a specific example, the local augmented reality image 402 is shown with a street name "W 54TH ST" when the path signage layer 704 is selected.

The traffic layer 706 is defined as an indicator showing how congested certain travel paths or locations are. For example, the traffic layer 706 can be selected for presenting streets highlighted with a number of colors with each color indicating a range of average speeds travelled by vehicles on the streets. It is understood that the traffic layer 706 can be used to configure the local augmented reality image 402, whereas the traffic mode 308 of FIG. 3 described above can be used to configure the navigation map 204.

The bike lane layer 708 is defined as an indicator showing geographical routes for bicyclists to ride. For example, the bike lane layer 708 can be selected for presenting travel paths with unique symbols, colors, or a combination thereof that are distinct from other symbols used in the local augmented reality image 402 for drivers to pay attention to for safety of bicyclists riding in bike lanes.

The address number layer 710 is defined as an indicator showing a unique number of a physical location. For example, the address number layer 710 can be selected to show a number of a house or a business. Also for example, the address number layer 710 can be a venue number.

The display interface 202 can present a search dialog box 712, which is defined as a graphical user interface, for entering a keyword of a point of interest 714. The point of interest 714 is defined as a geographical location. For example, the search dialog box 712 can be used to search for the point of interest 714 including gas stations or restaurants. Also for example, the point of interest 714 can be searchable in channels or categories including nearest gas stations and nearest hotels from the current location 404.

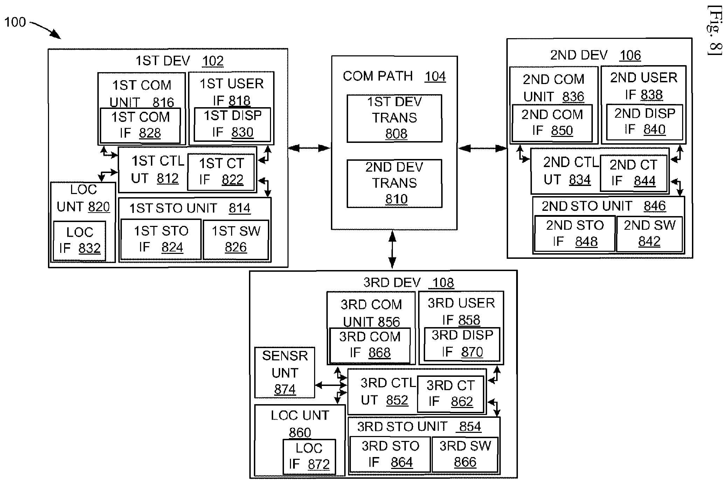

Referring now to FIG. 8, therein is shown an exemplary block diagram of the navigation system 100. The navigation system 100 can include the first device 102, the third device 108, the communication path 104, and the second device 106.

The first device 102 or the third device 108 can communicate with the second device 106 over the communication path 104. The first device 102 can send information in a first device transmission 808 over the communication path 104 to the second device 106. The second device 106 can send information in a second device transmission 810 over the communication path 104 to the first device 102.

For illustrative purposes, the navigation system 100 is shown with the first device 102 or the third device 108 as a client device, although it is understood that the navigation system 100 can have the first device 102 or the third device 108 as a different type of device. For example, the first device 102 or the third device 108 can be a server.

Also for illustrative purposes, the navigation system 100 is shown with the second device 106 as a server, although it is understood that the navigation system 100 can have the second device 106 as a different type of device. For example, the second device 106 can be a client device.

For brevity of description in this embodiment of the present invention, the first device 102 and the third device 108 will be described as a client device and the second device 106 will be described as a server device. The present invention is not limited to this selection for the type of devices. The selection is an example of the present invention.

The first device 102 can include a first control unit 812, a first storage unit 814, a first communication unit 816, a first user interface 818, and a location unit 820. The first control unit 812 can include a first control interface 822. The first control unit 812 can execute a first software 826 to provide the intelligence of the navigation system 100. The first control unit 812 can be implemented in a number of different manners. For example, the first control unit 812 can be a processor, an embedded processor, a microprocessor, a hardware control logic, a hardware finite state machine (FSM), a digital signal processor (DSP), or a combination thereof. The first control interface 822 can be used for communication between the first control unit 812 and other functional units in the first device 102. The first control interface 822 can also be used for communication that is external to the first device 102.

The first control interface 822 can receive information from the other functional units or from external sources, or can transmit information to the other functional units or to external destinations. The external sources and the external destinations refer to sources and destinations physically separate to the first device 102.

The first control interface 822 can be implemented in different ways and can include different implementations depending on which functional units or external units are being interfaced with the first control interface 822. For example, the first control interface 822 can be implemented with a pressure sensor, an inertial sensor, a microelectromechanical system (MEMS), optical circuitry, waveguides, wireless circuitry, wireline circuitry, or a combination thereof.

The location unit 820 can generate or calculate location information, the current location 404 of FIG. 4, current heading, and current speed of the first device 102, as examples. The location unit 820 can be implemented in many ways. For example, the location unit 820 can function as at least a part of a global positioning system (GPS), an inertial navigation system, a cellular-tower location system, a pressure location system, or any combination thereof.

The location unit 820 can include a location interface 832. The location interface 832 can be used for communication between the location unit 820 and other functional units in the first device 102. The location interface 832 can also be used for communication that is external to the first device 102.

The location interface 832 can receive information from the other functional units or from external sources, or can transmit information to the other functional units or to external destinations. The external sources and the external destinations refer to sources and destinations physically separate to the first device 102.

The location interface 832 can include different implementations depending on which functional units or external units are being interfaced with the location unit 820. The location interface 832 can be implemented with technologies and techniques similar to the implementation of the first control interface 822.

The first storage unit 814 can store the first software 826. The first storage unit 814 can also store the relevant information, such as advertisements, points of interest (POI), navigation routing entries, or any combination thereof.

The first storage unit 814 can be a volatile memory, a nonvolatile memory, an internal memory, an external memory, or a combination thereof. For example, the first storage unit 814 can be a nonvolatile storage such as non-volatile random access memory (NVRAM), Flash memory, disk storage, or a volatile storage such as static random access memory (SRAM).

The first storage unit 814 can include a first storage interface 824. The first storage interface 824 can be used for communication between the location unit 820 and other functional units in the first device 102. The first storage interface 824 can also be used for communication that is external to the first device 102.

The first storage interface 824 can receive information from the other functional units or from external sources, or can transmit information to the other functional units or to external destinations. The external sources and the external destinations refer to sources and destinations physically separate to the first device 102.

The first storage interface 824 can include different implementations depending on which functional units or external units are being interfaced with the first storage unit 814. The first storage interface 824 can be implemented with technologies and techniques similar to the implementation of the first control interface 822.

The first communication unit 816 can enable external communication to and from the first device 102. For example, the first communication unit 816 can permit the first device 102 to communicate with the second device 106 of FIG. 1, an attachment, such as a peripheral device or a computer desktop, and the communication path 104.

The first communication unit 816 can also function as a communication hub allowing the first device 102 to function as part of the communication path 104 and not limited to be an end point or terminal unit to the communication path 104. The first communication unit 816 can include active and passive components, such as microelectronics or an antenna, for interaction with the communication path 104.

The first communication unit 816 can include a first communication interface 828. The first communication interface 828 can be used for communication between the first communication unit 816 and other functional units in the first device 102. The first communication interface 828 can receive information from the other functional units or can transmit information to the other functional units.

The first communication interface 828 can include different implementations depending on which functional units are being interfaced with the first communication unit 816. The first communication interface 828 can be implemented with technologies and techniques similar to the implementation of the first control interface 822.

The first user interface 818 allows a user (not shown) to interface and interact with the first device 102. The first user interface 818 can include an input device and an output device. Examples of the input device of the first user interface 818 can include a keypad, a touchpad, soft-keys, a keyboard, a microphone, or any combination thereof to provide data and communication inputs.

The first user interface 818 can include a first display interface 830. The first display interface 830 can include a display, a projector, a video screen, a speaker, or any combination thereof.

The first control unit 812 can operate the first user interface 818 to display information generated by the navigation system 100. The first control unit 812 can also execute the first software 826 for the other functions of the navigation system 100, including receiving location information from the location unit 820. The first control unit 812 can further execute the first software 826 for interaction with the communication path 104 via the first communication unit 816.

The second device 106 can be optimized for implementing the present invention in a multiple device embodiment with the first device 102. The second device 106 can provide the additional or higher performance processing power compared to the first device 102. The second device 106 can include a second control unit 834, a second communication unit 836, and a second user interface 838.

The second user interface 838 allows a user (not shown) to interface and interact with the second device 106. The second user interface 838 can include an input device and an output device. Examples of the input device of the second user interface 838 can include a keypad, a touchpad, soft-keys, a keyboard, a microphone, or any combination thereof to provide data and communication inputs. Examples of the output device of the second user interface 838 can include a second display interface 840. The second display interface 840 can include a display, a projector, a video screen, a speaker, or any combination thereof.

The second control unit 834 can execute a second software 842 to provide the intelligence of the second device 106 of the navigation system 100. The second software 842 can operate in conjunction with the first software 826. The second control unit 834 can provide additional performance compared to the first control unit 812.

The second control unit 834 can operate the second user interface 838 to display information. The second control unit 834 can also execute the second software 842 for the other functions of the navigation system 100, including operating the second communication unit 836 to communicate with the first device 102 over the communication path 104.

The second control unit 834 can be implemented in a number of different manners. For example, the second control unit 834 can be a processor, an embedded processor, a microprocessor, a hardware control logic, a hardware finite state machine (FSM), a digital signal processor (DSP), or a combination thereof.

The second control unit 834 can include a second control interface 844. The second control interface 844 can be used for communication between the second control unit 834 and other functional units in the second device 106. The second control interface 844 can also be used for communication that is external to the second device 106.

The second control interface 844 can receive information from the other functional units or from external sources, or can transmit information to the other functional units or to external destinations. The external sources and the external destinations refer to sources and destinations physically separate to the second device 106.

The second control interface 844 can be implemented in different ways and can include different implementations depending on which functional units or external units are being interfaced with the second control interface 844. For example, the second control interface 844 can be implemented with a pressure sensor, an inertial sensor, a microelectromechanical system (MEMS), optical circuitry, waveguides, wireless circuitry, wireline circuitry, or a combination thereof.

A second storage unit 846 can store the second software 842. The second storage unit 846 can also store the relevant information, such as advertisements, points of interest (POI), navigation routing entries, or any combination thereof. The second storage unit 846 can be sized to provide the additional storage capacity to supplement the first storage unit 814.

For illustrative purposes, the second storage unit 846 is shown as a single element, although it is understood that the second storage unit 846 can be a distribution of storage elements. Also for illustrative purposes, the navigation system 100 is shown with the second storage unit 846 as a single hierarchy storage system, although it is understood that the navigation system 100 can have the second storage unit 846 in a different configuration. For example, the second storage unit 846 can be formed with different storage technologies forming a memory hierarchal system including different levels of caching, main memory, rotating media, or off-line storage.

The second storage unit 846 can be a volatile memory, a nonvolatile memory, an internal memory, an external memory, or a combination thereof. For example, the second storage unit 846 can be a nonvolatile storage such as non-volatile random access memory (NVRAM), Flash memory, disk storage, or a volatile storage such as static random access memory (SRAM).

The second storage unit 846 can include a second storage interface 848. The second storage interface 848 can be used for communication between the location unit 820 and other functional units in the second device 106. The second storage interface 848 can also be used for communication that is external to the second device 106.

The second storage interface 848 can receive information from the other functional units or from external sources, or can transmit information to the other functional units or to external destinations. The external sources and the external destinations refer to sources and destinations physically separate to the second device 106.

The second storage interface 848 can include different implementations depending on which functional units or external units are being interfaced with the second storage unit 846. The second storage interface 848 can be implemented with technologies and techniques similar to the implementation of the second control interface 844.

The second communication unit 836 can enable external communication to and from the second device 106. For example, the second communication unit 836 can permit the second device 106 to communicate with the first device 102 over the communication path 104.

The second communication unit 836 can also function as a communication hub allowing the second device 106 to function as part of the communication path 104 and not limited to be an end point or terminal unit to the communication path 104. The second communication unit 836 can include active and passive components, such as microelectronics or an antenna, for interaction with the communication path 104.

The second communication unit 836 can include a second communication interface 850. The second communication interface 850 can be used for communication between the second communication unit 836 and other functional units in the second device 106. The second communication interface 850 can receive information from the other functional units or can transmit information to the other functional units.

The second communication interface 850 can include different implementations depending on which functional units are being interfaced with the second communication unit 836. The second communication interface 850 can be implemented with technologies and techniques similar to the implementation of the second control interface 844.

The first communication unit 816 can couple with the communication path 104 to send information to the second device 106 in the first device transmission 808. The second device 106 can receive information in the second communication unit 836 from the first device transmission 808 of the communication path 104.

The second communication unit 836 can couple with the communication path 104 to send information to the first device 102 in the second device transmission 810. The first device 102 can receive information in the first communication unit 816 from the second device transmission 810 of the communication path 104. The navigation system 100 can be executed by the first control unit 812, the second control unit 834, or a combination thereof.

For illustrative purposes, the second device 106 is shown with the partition having the second user interface 838, the second storage unit 846, the second control unit 834, and the second communication unit 836, although it is understood that the second device 106 can have a different partition. For example, the second software 842 can be partitioned differently such that some or all of its function can be in the second control unit 834 and the second communication unit 836. Also, the second device 106 can include other functional units not shown in FIG. 8 for clarity.

The third device 108 can include a third control unit 852, a third storage unit 854, a third communication unit 856, a third user interface 858, and a location unit 860. The third control unit 852 can include a third control interface 862. The third control unit 852 can execute a third software 866 to provide the intelligence of the navigation system 100. The third control unit 852 can be implemented in a number of different manners. For example, the third control unit 852 can be a processor, an embedded processor, a microprocessor, a hardware control logic, a hardware finite state machine (FSM), a digital signal processor (DSP), or a combination thereof. The third control interface 862 can be used for communication between the third control unit 852 and other functional units in the third device 108. The third control interface 862 can also be used for communication that is external to the third device 108.

The third control interface 862 can receive information from the other functional units or from external sources, or can transmit information to the other functional units or to external destinations. The external sources and the external destinations refer to sources and destinations physically separate to the third device 108.

The third control interface 862 can be implemented in different ways and can include different implementations depending on which functional units or external units are being interfaced with the third control interface 862. For example, the third control interface 862 can be implemented with a pressure sensor, an inertial sensor, a microelectromechanical system (MEMS), optical circuitry, waveguides, wireless circuitry, wireline circuitry, or a combination thereof.

The location unit 860 can generate location information, current heading, and current speed of the third device 108, as examples. The location unit 860 can be implemented in many ways. For example, the location unit 860 can function as at least a part of a global positioning system (GPS), an inertial navigation system, a cellular-tower location system, a pressure location system, or any combination thereof.

The location unit 860 can include a location interface 872. The location interface 872 can be used for communication between the location unit 860 and other functional units in the third device 108. The location interface 872 can also be used for communication that is external to the third device 108.

The location interface 872 can receive information from the other functional units or from external sources, or can transmit information to the other functional units or to external destinations. The external sources and the external destinations refer to sources and destinations physically separate to the third device 108.

The location interface 872 can include different implementations depending on which functional units or external units are being interfaced with the location unit 860. The location interface 872 can be implemented with technologies and techniques similar to the implementation of the third control interface 862.

The third storage unit 854 can store the third software 866. The third storage unit 854 can also store the relevant information, such as advertisements, points of interest (POI), navigation routing entries, or any combination thereof.

The third storage unit 854 can be a volatile memory, a nonvolatile memory, an internal memory, an external memory, or a combination thereof. For example, the third storage unit 854 can be a nonvolatile storage such as non-volatile random access memory (NVRAM), Flash memory, disk storage, or a volatile storage such as static random access memory (SRAM).

The third storage unit 854 can include a third storage interface 864. The third storage interface 864 can be used for communication between the location unit 860 and other functional units in the third device 108. The third storage interface 864 can also be used for communication that is external to the third device 108.

The third storage interface 864 can receive information from the other functional units or from external sources, or can transmit information to the other functional units or to external destinations. The external sources and the external destinations refer to sources and destinations physically separate to the third device 108.

The third storage interface 864 can include different implementations depending on which functional units or external units are being interfaced with the third storage unit 854. The third storage interface 864 can be implemented with technologies and techniques similar to the implementation of the third control interface 862.

The third communication unit 856 can enable external communication to and from the third device 108. For example, the third communication unit 856 can permit the third device 108 to communicate with the second device 106, an attachment, such as a peripheral device or a computer desktop, and the communication path 104.

The third communication unit 856 can also function as a communication hub allowing the third device 108 to function as part of the communication path 104 and not limited to be an end point or terminal unit to the communication path 104. The third communication unit 856 can include active and passive components, such as microelectronics or an antenna, for interaction with the communication path 104.

The third communication unit 856 can include a third communication interface 868. The third communication interface 868 can be used for communication between the third communication unit 856 and other functional units in the third device 108. The third communication interface 868 can receive information from the other functional units or can transmit information to the other functional units.

The third communication interface 868 can include different implementations depending on which functional units are being interfaced with the third communication unit 856. The third communication interface 868 can be implemented with technologies and techniques similar to the implementation of the third control interface 862.

The third user interface 858 allows a user (not shown) to interface and interact with the third device 108. The third user interface 858 can include an input device and an output device. Examples of the input device of the third user interface 858 can include a keypad, a touchpad, soft-keys, a keyboard, a microphone, or any combination thereof to provide data and communication inputs.

The third user interface 858 can include a third display interface 870. The third display interface 870 can include a display, a projector, a video screen, a speaker, or any combination thereof.

The third control unit 852 can operate the third user interface 858 to display information generated by the navigation system 100. The third control unit 852 can also execute the third software 866 for the other functions of the navigation system 100, including receiving location information from the location unit 860. The third control unit 852 can further execute the third software 866 for interaction with the communication path 104 via the third communication unit 856.

A sensor unit 874 can detect a person's presence. For example, the sensor unit 874 can detect the person's presence within a detection zone. Examples of the sensor unit 874 can include a digital camera, video camera, thermal camera, night vision camera, infrared camera, x-ray camera, or the combination thereof. Further examples of the sensor unit 874 can include a facial recognition device, a finger print scanner, a retina scanner, a physiological monitoring device, light identifier, or a combination thereof.

Referring now to FIG. 9, therein is shown a control flow of the navigation system 100. The navigation system 100 can represent a system for dynamic real-time navigation with augmented reality (AR). For example, the navigation system 100 can provide map and navigation on a mobile device including the first device 102 of FIG. 1, the third device 108 of FIG. 1, or a combination thereof. For example, the first device 102 and the third device 108 can represent mobile devices.

The navigation system 100 can include a selection module 902, a command execution module 904, a display mode module 906, and a transport mode module 908. The navigation system 100 can include a navigation module 910 having a local navigation module 912 and a remote navigation module 914. The navigation system 100 can include an image generation module 916 having a local image generation module 918 and a remote image generation module 920. The navigation system 100 can include a notification module 922.

The selection module 902 provides an interface for selecting the remote target 206 of FIG. 2. For example, the remote target 206 can be a mobile device or a physical entity whose location changes from one place to another. Also for example, the remote target 206 can initially be stationary at the time when the remote target 206 is selected but may subsequently be moving. Further, for example, the remote target 206 can be moving, stopping, and then resuming along the remote navigation route 604 of FIG. 6. As a specific example, the remote target 206 can be selected as a physical entity that operates or is attached to the third device 108.

The remote target 206 can be selected based on the preference 924, a share setting 926, or a combination thereof. The preference 924 is defined as a list of choices desired more than other choices. The share setting 926 is defined as an option configured to make one's location available to others. For example, the share setting 926 can represent opt-in share settings amongst users that are in each other's contacts or social network.

For example, the preference 924 can include something that a user of the third device 108 desires to have or to do. Also for example, the preference 924 can include more preferred choices of types of food to eat, places to visit, types of moves to watch, and a list of music genres. As a specific example, the selection module 902 can select the remote target 206 for a user of the first device 102 to follow when the user of the first device 102 has a similar choice desired as the preference 924 of the remote target 206.

For example, the share setting 926 of the remote target 206 using the third device 108 can be configured to make the remote location 208 of FIG. 2 of the remote target 206 available to a user of the first device 102. Also for example, the share setting 926 can be configured such that a user of the first device 102 is in a contact list of or has a relationship with the remote target 206 in a social network can access the remote location 208 of the remote target 206.

The command execution module 904 performs a selection of the command menu 210 of FIG. 2 including the follow command 212 of FIG. 2, the send message command 214 of FIG. 2, and the get contact details command 216 of FIG. 2. The command execution module 904 can be performed on the first device 102, the third device 108, or a combination thereof.

The follow command 212 can be performed to generate navigation guidance for travelling from a geographical location to another geographical location. For example, the follow command 212 can be performed on the first device 102 to generate the local navigation route 406 of FIG. 4 for travelling from the current location 404 of FIG. 4 to the remote location 208.

The send message command 214 can be performed to transmit information from a navigation device to another navigation device. For example, the send message command 214 can be performed on the first device 102 to transmit information as a message from the first device 102 to the third device 108 or vice versa.

The get contact details command 216 can be performed to obtain specific descriptions associated with a navigation device or a user of the navigation device. For example, the get contact details command 216 can be performed on the first device 102 to obtain specific descriptions associated with the remote target 206 from the third device 108 or vice versa.

The display mode module 906 performs an operation based on a selection of the display menu 302 of FIG. 3 including the satellite mode 304 of FIG. 3, the map mode 306 of FIG. 3, the traffic mode 308 of FIG. 3, and the augmented reality mode 310 of FIG. 3. The display mode module 906 can be performed on the first device 102, the third device 108, or a combination thereof.

The display mode module 906 can send a request to a local route module 1004 of FIG. 10 or a remote route module 1020 of FIG. 10 to generate a geographical area as seen from a space above the geographical area to be presented based on the satellite mode 304. For example, the satellite mode 304 can be selected for presenting an image of a geographical area as seen by a satellite in orbit at the current location 404 or the remote location 208 for the first device 102 or the third device 108, respectively.

The display mode module 906 can send a request to the local route module 1004 or the remote route module 1020 to generate a representation of a geographical area based on the map mode 306. For example, the map mode 306 can be selected for presenting a representation of geographical regions at the current location 404 or the remote location 208 for the first device 102 or the third device 108, respectively.

The display mode module 906 can send a request to the local route module 1004 or the remote route module 1020 to generate a geographical area with indicators showing how congested certain travel paths or locations are based on the traffic mode 308. For example, the traffic mode 308 can be selected for presenting travel paths highlighted with a number of colors with each color indicating a different range of average speeds travelled by vehicles in the travel paths at the current location 404 or the remote location 208 for the first device 102 or the third device 108, respectively.

The display mode module 906 can send a request to the local route module 1004 or the remote route module 1020 to generate real images of a geographical area combined with indicators or computer-generated images overlay over the real images based on the augmented reality mode 310. For example, the augmented reality mode can be selected for generating the local augmented reality image 402 of FIG. 4, with the local overlay path 408 of FIG. 4 and the arrows 410 of FIG. 4, and the remote augmented reality image 602 of FIG. 6, with the remote overlay path 606 of FIG. 6, for the first device 102 or the third device 108, respectively.

The transport mode module 908 performs an operation based on a selection of the transport menu 312 of FIG. 3 including the driving method 314 of FIG. 3, the public transit method 316 of FIG. 3, and the pedestrian method 318 of FIG. 3. The transport mode module 908 can be performed on the first device 102, the third device 108, or a combination thereof.

The transport mode module 908 can send a request to the local route module 1004 or the remote route module 1020 to determine the local navigation route 406 or the remote navigation route 604, respectively, based on the driving method 314. For example, the driving method 314 can be selected for determining the local navigation route 406 or the remote navigation route 604 travelled by automobiles.

The transport mode module 908 can send a request to the local route module 1004 or the remote route module 1020 to determine the local navigation route 406 or the remote navigation route 604, respectively, based on the public transit method 316. For example, the public transit method 316 can be selected for determining the local navigation route 406 or the remote navigation route 604 based on shared passenger transportation services available for use by the public.

The transport mode module 908 can send a request to the local route module 1004 or the remote route module 1020 to determine the local navigation route 406 or the remote navigation route 604, respectively, based on the pedestrian method 318. For example, the pedestrian method 318 can be selected for determining the local navigation route 406 when a user operating the first device 102 wants to walk from the current location 404 to the remote location 208.

The navigation module 910 calculates navigation routes and provides navigation directions. The navigation module 910 can generate the local navigation route 406 and the remote navigation route 604.

The navigation module 910 can include the local navigation module 912 to calculate the local navigation route 406 as well as generating navigation directions along the local navigation route 406. For example, the local navigation route 406 can be generated to guide a user using the first device 102 from the current location 404 of the user using the first device 102 to the remote location 208 of the remote target 206 using or attached to the third device 108. The navigation module 910 can include the remote navigation module 914 to calculate the remote navigation route 604 as well as generating navigation directions along the remote navigation route 604.

The image generation module 916 determines the local augmented reality image 402 and the remote augmented reality image 602. The image generation module 916 can include the local image generation module 918 and the remote image generation module 920.

The local image generation module 918 determines the local augmented reality image 402 with the local navigation route 406 for displaying on the first device 102. The local navigation route 406 can be associated with the current location 404 and the remote location 208 of the remote target 206. The display interface 202 of FIG. 2 can present the local augmented reality image 402 on the first device 102. The local augmented reality image 402 shown with the local navigation route 406 from the current location 404 to the remote location 208 provides a real view of how far a driving distance to the remote target 206 is.

The local augmented reality image 402 can be determined by generating a real image of a surrounding of a geographical area where the first device 102 at the current location 404. The real image of the local augmented reality image 402 can be generated using an image capture device including an image sensor. For example, the local augmented reality image 402 can be generated using an image sensor installed on a physical structure that is located along the local navigation route 406 including light posts, freeway signs, and traffic lights. The local augmented reality image 402 can be dynamically generated such as in real-time.

The local augmented reality image 402 can include the local overlay path 408 to represent a portion of the local navigation route 406. The local augmented reality image 402 can include the portion of the local navigation route 406 for providing navigation guidance from the current location 404 to the remote location 208.

The local augmented reality image 402 can include the arrows 410 along with the local overlay path 408 to provide a turn-by-turn navigation direction overlaid over the real image used to generate the local augmented reality image 402. For example, the local overlay path 408 and the arrows 410 can be presented in a viewfinder of the display interface 202.

The local augmented reality image 402 can include the cardinal direction 412 of FIG. 4 to provide cardinal points as information of direction of travel. For example, the local augmented reality image 402 can include the cardinal direction 412, shown as "N" for "North" in an upper-left corner of the local augmented reality image 402 of FIG. 4.

The local augmented reality image 402 can include a selection of the transport menu 312 including the driving method 314, the public transit method 316, and the pedestrian method 318. For example, the local augmented reality image 402 can include the pedestrian method 318, as shown in an upper-right corner of the local augmented reality image 402.

The local augmented reality image 402 can include a selection of the display menu 302 including the satellite mode 304, the map mode 306, the traffic mode 308, and the augmented reality mode 310. For example, the local augmented reality image 402 can include the augmented reality mode 310, shown as "AR" in a lower-right corner of the local augmented reality image 402.

The local augmented reality image 402 can include a number of the presentation layers 702 of FIG. 7. For example, the presentation layers 702 can include the path signage layer 704 of FIG. 7, the traffic layer 706 of FIG. 7, the bike lane layer 708 of FIG. 7, the address number layer 710 of FIG. 7, or a combination thereof. For example in real-time navigation, it can be unclear where to turn. Thus, the local augmented reality image 402 having the path signage layer 704 along with the local overlay path 408 and the arrows 410 can provide a clear guidance by clearly indicate which directions to turn.

The local augmented reality image 402 can include the search dialog box 712 of FIG. 7 overlaid over the real image of the local augmented reality image 402. The search dialog box 712 can be provided for entering a keyword of the point of interest 714 of FIG. 7.

The local augmented reality image 402 can include the beacon 502 of FIG. 5. For example, the beacon 502 can be generated in the local augmented reality image 402 of FIG. 5 to indicate that the local navigation route 406 is towards a geographic location pointed to by the beacon 502.

The remote image generation module 920 determines the remote augmented reality image 602 with the remote navigation route 604 for displaying on the third device 108. The remote navigation route 604 can be associated with the remote location 208. The display interface 202 can present the remote augmented reality image 602 on the third device 108, the first device 102, or a combination thereof.

The remote augmented reality image 602 can be determined by generating a real image of a surrounding of a geographical area where the third device 108 at the remote location 208. The real image of the remote augmented reality image 602 can be generated using an image capture device including an image sensor. For example, the remote augmented reality image 602 can be generated using an image sensor installed on a physical structure that is located along the remote navigation route 604 including light posts, freeway signs, and traffic lights. The remote augmented reality image 602 can be dynamically generated such as in real-time.

The remote augmented reality image 602 can include the remote overlay path 606 for presenting a portion of the remote navigation route 604. The remote augmented reality image 602 can include the portion of the remote navigation route 604 for providing navigation guidance from the remote location 208 to a remote destination 1018 of FIG. 10.

The remote augmented reality image 602 can include the object indicator 608 of FIG. 6. For example, the object indicator 608 can be based on a shopping list when the remote target 206, such as a user of the third device 108, goes shopping at the grocery store.

The remote augmented reality image 602 can include a real image of a geographical area or an inside view of a physical structure. For example, the remote augmented reality image 602 can include a real image of a surrounding inside a grocery store with the remote overlay path 606 to indicate a travel path inside the grocery store.

For example, the remote augmented reality image 602 can be shared by the remote route module 1020 by sending the remote augmented reality image 602 from the remote route module 1020 to the local route module 1004. Also for example, the remote augmented reality image 602 can be shared among users of different devices such as people driving in the same car from a person to another person sitting in the back of the car to help navigate.

The notification module 922 provides information as an alert for a specific event. For example, the notification module 922 can generate alerts including a follow notification 928, a turn notification 930, and an item notification 932. The notification module 922 can provide the follow notification 928, the turn notification 930, and the item notification 932 for displaying on the first device 102, the third device 108, or a combination thereof.

The follow notification 928, the turn notification 930, and the item notification 932 can be generated visually, audibly, or a combination thereof. For example, the follow notification 928, the turn notification 930, and the item notification 932 can be visually generated in the local augmented reality image 402 or the remote augmented reality image 602.

The follow notification 928 is defined as information provided to alert a user of a navigation device that the user is being followed. For example, the follow notification 928 can be generated on the third device 108 when a user of the first device 102 is detected as following the remote target 206 operating the third device 108.

The turn notification 930 is defined as information provided to alert a user of a navigation device that another navigation device is making or about to make a turn. For example, the turn notification 930 can be generated on the first device 102 when the remote target 206 is determined to make a turn along the remote navigation route 604. In this example, the remote target 206 making a turn can eventually be detected by the first device 102 when the local augmented reality image 402 with the remote target 206 shown therein is updated in real-time on the first device 102.

The item notification 932 is defined as information provided to alert a user of a navigation device that the object indicator 608 is detected in the local augmented reality image 402 or the remote augmented reality image 602. The item notification 932 and the object indicator 608 provide an opportunity for users to know other information about places to make decision where to go next along the remote navigation route 604 or the local navigation route 406.

For example, users of the first device 102 know that the remote target 206 can take a long time to reach a destination and that the users may be at the destination early, the users can take an opportunity to do other things or meet other people along the way. In this example, the users do not have to exit a navigation program and initiate the send message command 214 to the remote target 206 that the user is making a detour.

For example, as shown in FIG. 6, the item notification 932 can be generated on the third device 108 when the object indicator 608 is detected along the remote navigation route 604. In this example, the object indicator 608 is generated when an item of interest, shown as "BARILLA SPAGHETTI" and "OLIVE OIL", is detected in a grocery store.

The navigation system 100 can represent a map and navigation system on the first device 102 that allows users to follow the remote target 206. For example, the remote target 206 can represent a friend to whom the users follow with the third device 108 operated by the friend by displaying, dynamically updating, and reroute the local navigation route 406 based on the current location 404 and the remote location 208.

Depending on the share setting 926 of an individual user, sharing of the remote location 208 can be for a predetermined amount of time during a portion of the remote navigation route 604 or active at all times. The sharing of the remote location 208 allows for a "follow the leader" kind of interaction. The local image generation module 918 can display directions overlaid over the navigation map 204 of FIG. 2 or via the local augmented reality image 402 showing lines in the viewfinder using the local overlay path 408 and the arrows 410 leading users to the remote location 208 or the remote destination 1018.

The selection module 902 can be implemented with the first device 102, the second device 106 of FIG. 1, the third device 108, or a combination thereof. For example, the selection module 902 can be implemented with the first control unit 812 of FIG. 8, the first storage unit 814 of FIG. 8, the first communication unit 816 of FIG. 8, the first user interface 818 of FIG. 8, and the location unit 820 of FIG. 8. For a specific example, the first control unit 812 can be implemented to select the remote target 206 based on the share setting 926 and the preference 924.

The command execution module 904 can be implemented with the first device 102, the second device 106, the third device 108, or a combination thereof. For example, the command execution module 904 can be implemented with the first control unit 812, the first storage unit 814, the first communication unit 816, the first user interface 818, and the location unit 820. For a specific example, the first control unit 812 can be implemented to perform a selection of the command menu 210 including the follow command 212, the send message command 214, and the get contact details command 216.

The display mode module 906 can be implemented with the first device 102, the second device 106, the third device 108, or a combination thereof. For example, the display mode module 906 can be implemented with the first control unit 812, the first storage unit 814, the first communication unit 816, the first user interface 818, and the location unit 820. For a specific example, the first control unit 812 can be implemented to perform an operation based on a selection of the display menu 302 including the satellite mode 304, the map mode 306, the traffic mode 308, and the augmented reality mode 310.

The transport mode module 908 can be implemented with the first device 102, the second device 106, the third device 108, or a combination thereof. For example, the transport mode module 908 can be implemented with the first control unit 812, the first storage unit 814, the first communication unit 816, the first user interface 818, and the location unit 820. For a specific example, the first control unit 812 can be implemented to perform an operation based on a selection of the transport menu 312 including the driving method 314, the public transit method 316, and the pedestrian method 318.

The local navigation module 912 can be implemented with the first device 102, the second device 106, the third device 108, or a combination thereof. For example, the local navigation module 912 can be implemented with the first control unit 812, the first storage unit 814, the first communication unit 816, the first user interface 818, and the location unit 820. For a specific example, the first control unit 812 can be implemented to calculate the local navigation route 406 as well as generating navigation directions along the local navigation route 406.

The remote navigation module 914 can be implemented with the first device 102, the second device 106, the third device 108, or a combination thereof. For example, the remote navigation module 914 can be implemented with the third control unit 852 of FIG. 8, the third storage unit 854 of FIG. 8, the third communication unit 856 of FIG. 8, the third user interface 858 of FIG. 8, and the location unit 860 of FIG. 8. For a specific example, the third control unit 852 can be implemented to calculate the remote navigation route 604 as well as generating navigation directions along the remote navigation route 604.

The local image generation module 918 can be implemented with the first device 102, the second device 106, the third device 108, or a combination thereof. For example, the local image generation module 918 can be implemented with the first control unit 812, the first storage unit 814, the first communication unit 816, the first user interface 818, and the location unit 820. For a specific example, the first control unit 812 can be implemented to generate the local augmented reality image 402 with the local navigation route 406 associated with the remote target 206. For another specific example, the first control unit 812 can be implemented to generate the local augmented reality image 402 based on the current location 404 with the augmented reality mode 310 selected, to generate the local augmented reality image 402 with the path signage layer 704.

The remote image generation module 920 can be implemented with the first device 102, the second device 106, the third device 108, or a combination thereof. For example, the remote image generation module 920 can be implemented with the third control unit 852, the third storage unit 854, the third communication unit 856, the third user interface 858, and the location unit 860. For a specific example, the third control unit 852 can be implemented to generate the remote augmented reality image 602 of the remote location 208, the remote augmented reality image 602 having the remote overlay path 606.

The notification module 922 can be implemented with the first device 102, the second device 106, the third device 108, or a combination thereof. For example, the notification module 922 can be implemented with the third control unit 852, the third storage unit 854, the third communication unit 856, the third user interface 858, and the location unit 860. For a specific example, the third control unit 852 can be implemented to generate the follow notification 928 for indicating the remote target 206 is being followed.

The selection module 902 can be coupled to the command execution module 904. The command execution module 904 can be coupled to the display mode module 906. The display mode module 906 can be coupled to the transport mode module 908. The transport mode module 908 can be coupled to the local navigation module 912. The local navigation module 912 can be coupled to the remote navigation module 914. The remote navigation module 914 can be coupled to the local image generation module 918. The local image generation module 918 can be coupled to the remote image generation module 920. The remote image generation module 920 can be coupled to the notification module 922.

Referring now to FIG. 10, therein is shown a detailed control flow of the navigation module 910. The navigation module 910 can include the local navigation module 912 and the remote navigation module 914.

The local navigation module 912 can include a local location module 1002 to calculate the current location 404 of FIG. 4. The current location 404 can be calculated for locating a user of the first device 102 of FIG. 1.

The local navigation module 912 can include the local route module 1004 to determine the local navigation route 406 of FIG. 4. The local navigation route 406 can be determine by calculating a travel path from the current location 404 to the remote location 208 of FIG. 2 of the remote target 206 of FIG. 2 after the remote target 206 is selected. The local navigation route 406 can be presented on the navigation map 204 of FIG. 2 using the display interface 202 of FIGs. 2 and 3, as an example. The display interface 202 can present the remote target 206 at the remote location 208 on the navigation map 204.

The remote location 208 can change while a user of the first device 102 is following the remote target 206. The local navigation route 406 can be dynamically updated or rerouted when the remote target 206 is determined as moving by detecting a change in the remote location 208. The change in the remote location 208 can be detected when the remote location 208 is determined to be at a geographical location at an instance of time and subsequently at another geographical location at another instance of time after a specific duration. The specific duration can be in increments of time.

The remote location 208 can be calculated in increments of time. For example, the remote location 208 can be calculated in increments of seconds or units less than a second. For a specific example, the remote location 208 can be calculated every one to five seconds.

The local navigation route 406 can be calculated based on a selection of a transport method using the transport menu 312 of FIG. 3. The local navigation route 406 can be calculated based on the driving method 314 of FIG. 3, the public transit method 316 of FIG. 3, or the pedestrian method 318 of FIG. 3. The local navigation route 406 can be dynamically updated in real-time as the remote location 208 is updated when the remote target 206 moves from one location to another location.

The local navigation route 406 can be calculated based on a traffic condition 1006, which is defined as an indication of how congested a particular travel path is. For example, if there are obstructions or traffic jams, the local navigation route 406 can be rerouted using alternative travel paths.

For example, the traffic condition 1006 can be used to indicate that a road is congested during certain commute hours and that another road with less traffic can be selected for the local navigation route 406. Also for example, the traffic condition 1006 can be provided with traffic information including crowed-source traffic information. Further, for example, the traffic condition 1006 can be based on crowd-sourced traffic information.

The local navigation route 406 can be calculated based on a time-based mode 1008, which is defined as a method of determining a travel path with the least amount of time. For example, the time-based mode 1008 can be used to calculate the local navigation route 406 by selecting a street that would take the least amount of time for travel among available streets to provide a best-time navigation option.

The local navigation route 406 can be dynamically generated by being updated periodically in increments of time. For example, the local navigation route 406 can be updated in increments of seconds or units less than a second. For a specific example, the local navigation route 406 can be updated every one to five seconds.

The local navigation route 406 can be updated based on the task list 1010, which is defined as a list of actions to be performed. For example, the task list 1010 can include a list of actions that a user of the first device 102 would like to do. Also for example, the local navigation route 406 can be updated to include travel paths that the user can take to visit a number of geographical locations for the user to perform actions based on the task list 1010. As a specific example, the local navigation route 406 can be updated to guide along the way to stop by a grocery store to pick up groceries when the task list 1010 includes a task for grocery shopping.

The local navigation route 406 can be updated based on the schedule 1012, which is defined as a list of events that are planned. For example, the schedule 1012 can include a list of appointments or actions that are to be done by a particular time in a calendar. As a specific example, the local navigation route 406 can be updated to guide the user to a geographical location for the user to be at an appointment.

Before the local navigation route 406 is updated based on the task list 1010 or the schedule 1012, the local navigation module 912 can inform the user. This is so that the user can decide if he or she would like to take a detour to a geographical location and then resume traveling to the remote location 208 of the remote target 206. For example, the geographical location can be suggested by the local navigation module 912 or already planned in advance based on the task list 1010 or the schedule 1012.

For example, before the local navigation route 406 is calculated, the local navigation module 912 can interface with the remote navigation module 914 and determine that the current location 404 and the remote location 208 are driving in the same direction and within a geographical area of a restaurant. The local navigation module 912 can provide an option for a user of the first device 102 to send the send message command 214 of FIG. 2 to the third device 108 of FIG. 1 to request that the user would like to have dinner. Once the remote target 206 using the third device 108 acknowledges the request, the local navigation route 406 can be updated to guide the user of the first device 102 to the restaurant.

The local navigation module 912 can predict the remote location 208 when the remote location 208 is unknown in a case when the remote target 206 is not using a navigation program or the third device 108 is not operational or is unusable. In such case, the remote location 208 can be predicted based on a current geographical position or a travel direction of the remote target 206, as an example. The remote location 208 can be predicted based on the preference 924 of FIG. 9, a calendar, an appointment, the schedule 1012, or an email of the remote target 206, which can provide context information as to where likely the remote target 206 is heading. This case can also occur when communication between the first device 102 and the third device 108 is lost in an emergency.

The local route module 1004 can determine a local estimated time 1014, which is defined as a time to a destination. The local estimated time 1014 can be determined by estimating a time until a user of the first device 102 reaches the final destination based on a current average travel speed of the user, the traffic condition 1006, a selection of the transport menu 312, or a combination thereof. The selection of the transport menu 312 can include the driving method 314, the public transit method 316, and the pedestrian method 318.

The remote navigation module 914 can include a remote location module 1016 to calculate the remote location 208. The remote location 208 can be calculated for locating a user of the third device 108. The remote location 208 can be shared by the third device 108 to the first device 102. The remote location 208 can be shared until the third device 108 reaches the remote destination 1018, which is defined as a geographical location to where the remote target 206 travels.

The remote navigation module 914 can include the remote route module 1020 to determine the remote navigation route 604 of FIG. 6 associated with the remote location 208. The remote navigation route 604 can be determined by calculating a travel path to guide the remote target 206 using or attached to the third device 108 from the remote location 208 to the remote destination 1018. The remote navigation route 604 can be rerouted based on the traffic condition 1006 and the time-based mode 1008. For example, if there are obstructions or traffic jams, the remote navigation route 604 can be rerouted using alternative travel paths.

The remote navigation route 604 can be presented using the display interface 202 in FIG. 6, as an example. The display interface 202 can present the remote location 208 along the remote navigation route 604.

The remote route module 1020 can be configured by the remote target 206 to share the remote navigation route 604 by the third device 108 to the first device 102. A portion of the remote navigation route 604 or an entirety of the remote navigation route 604 can be shared. The local route module 1004 can track the remote target 206 when the remote navigation route 604 is shared with the local route module 1004 by the remote route module 1020. Thus, the local route module 1004 can provide navigation guidance to a user of the first device 102 to travel to the remote target 206 by calculating the local navigation route 406 from the current location 404 to the remote location 208 so that the user can intercept the remote navigation route 604 of the remote target 206.

The remote route module 1020 can determine a remote estimated time 1022, which is as a time to a destination. The remote estimated time 1022 can be determined by estimating a time until the remote target 206 reaches the remote destination 1018 based on a current average travel speed of the remote target 206, the traffic condition 1006, a selection of the transport menu 312, or a combination thereof. The selection of the transport menu 312 can include the driving method 314, the public transit method 316, and the pedestrian method 318

In a case when the remote estimated time 1022 is greater than the local estimated time 1014, the local route module 1004 determine the local navigation route 406 for a user of the first device 102 to travel such that the user can travel directly to the remote destination 1018. This is an example of a case when the remote target 206 can take a longer time to arrive at the remote destination 1018 than the user of the first device 102. As a specific example, the remote target 206 has decided to stop by a number of stores before going to the remote destination 1018. Thus, the user of the first device 102 and the remote target 206 have decided to meet each other at the remote destination 1018.

The local location module 1002 can be implemented with the first device 102, the second device 106 of FIG. 1, the third device 108, or a combination thereof. For example, the local location module 1002 can be implemented with the first control unit 812 of FIG. 8, the first storage unit 814 of FIG. 8, the first communication unit 816 of FIG. 8, the first user interface 818 of FIG. 8, and the location unit 820 of FIG. 8. For a specific example, the first control unit 812 can be implemented to calculate the current location 404.

The local route module 1004 can be implemented with the first device 102, the second device 106, the third device 108, or a combination thereof. For example, the local route module 1004 can be implemented with the first control unit 812, the first storage unit 814, the first communication unit 816, the first user interface 818, and the location unit 820. For a specific example, the first control unit 812 can be implemented to determine the local navigation route 406 from the current location 404 to the remote location 208.

The remote location module 1016 can be implemented with the first device 102, the second device 106, the third device 108, or a combination thereof. For example, the remote location module 1016 can be implemented with the third control unit 852 of FIG. 8, the third storage unit 854 of FIG. 8, the third communication unit 856 of FIG. 8, the third user interface 858 of FIG. 8, and the location unit 860 of FIG. 8. For a specific example, the third control unit 852 can be implemented to calculate the remote location 208.

The remote route module 1020 can be implemented with the first device 102, the second device 106, the third device 108, or a combination thereof. For example, the remote route module 1020 can be implemented with the third control unit 852, the third storage unit 854, the third communication unit 856, the third user interface 858, and the location unit 860. For a specific example, the third control unit 852 can be implemented to determine the remote navigation route 604 associated with the remote location 208.

The local location module 1002 can be coupled to the transport mode module 908 of FIG. 9 and the local route module 1004. The local route module 1004 can be coupled to the remote location module 1016. The remote location module 1016 can be coupled to the local image generation module 918 of FIG. 9.

It has been discovered that the local image generation module 918 generating the local augmented reality image 402 of FIG. 4 provides improved navigation efficiency for users following the remote target 206 by providing bird's eye view with the local augmented reality image 402 using real images thereby eliminating a chance of the users getting lost. The local augmented reality image 402 also provides safety since the remote target 206 does not have to pay attention to the users behind when a group of users are travelling together in a group. Thus, the remote target 206 is able to focus on driving. The local augmented reality image 402 also provides safety to users following the remote target 206 since the users are also able to focus on driving.

It has also been discovered that the local navigation route 406 associated with the remote target 206 dynamically updated in real-time provides safety since the drivers can focus on the roads while following the remote target 206 whose location changes from one place to another.

It has further been discovered that the local overlay path 408 of FIG. 4 and the arrows 410 of FIG. 4 provide safety so that the drivers is able to focus on the roads while following the remote target 206 since the local overlay path 408 and the arrows 410 provide clear turn-by-turn directions. The local overlay path 408 and the arrows 410 prevent mistakes from the drivers of not knowing where they are heading when there are forks in the road and streets that are close to each other.

It has further been discovered that the local augmented reality image 402 having the cardinal direction 412 of FIG. 4 provides improved navigation efficiency for users following the remote target 206.

It has further been discovered that the selection module 902 of FIG. 9 selecting the remote target 206 based on the preference 924 provides improved efficiency for navigation purposes since the local navigation route 406 and the remote navigation route 604 are effectively calculated based on the preference 924 of users using the first device 102 or the third device 108.

It has further been discovered that the selection module 902 selecting the remote target 206 based on the share setting 926 of FIG. 9 provides safety since only people who are in each other's contact lists or social network are allowed to follow the remote target 206.

It has further been discovered that the command execution module 904 of FIG. 9 performing a selection of the command menu 210 of FIG. 2 provides improved user interface by providing an option for executing the follow command 212 of FIG. 2, the send message command 214, and the get contact details command 216 of FIG. 2 in order for the first device 102 and the third device 108 to communicate with each other.

It has further been discovered that the display mode module 906 of FIG. 9 performing an operation based on a selection of the display menu 302 of FIG. 3 provides improved user interface by providing an option for generating the navigation map 204 with clear directions based on the satellite mode 304 of FIG. 3, the map mode 306 of FIG. 3, the traffic mode 308 of FIG. 3, or the augmented reality mode 310 of FIG. 3.

It has further been discovered that the transport mode module 908 performing an operation based on a selection of the transport menu 312 provides improved navigation estimation since the local navigation route 406 and the remote navigation route 604 are calculated based on an actual mode of transport. The actual mode of transport includes the driving method 314, the public transit method 316, and the pedestrian method 318.

It has further been discovered that the beacon 502 of FIG. 5 provides improved navigation efficiency for the users following the remote target 206 by indicating the remote location 208 where the remote target 206 is thereby eliminating a chance of the users getting lost.

It has further been discovered that the remote image generation module 920 of FIG. 9 generating the remote augmented reality image 602 of FIG. 6 provides improved navigation efficiency for the remote target 206 by providing bird's eye view with the remote augmented reality image 602 using real images thereby eliminating a chance of the users getting lost when travelling along the remote navigation route 604.

It has further been discovered that the remote overlay path 606 of FIG. 6 provides safety so that the remote target 206 is able to focus on the roads while travelling on the remote navigation route 604 since the remote overlay path 606 provides clear navigation directions. The remote overlay path 606 prevent mistakes from the drivers of not knowing which road to take when there are forks in the road and streets that are close to each other.

It has further been discovered that the local navigation route 406 and the remote navigation route 604 provide improved navigation guidance since the local navigation route 406 and the remote navigation route 604 are updated periodically in increments of seconds or units less than a second thereby providing a dynamic or real-time guidance. A problem is that existing maps and navigation systems display directions to users only via overlaying lines and turn-by-turn cues for static locations and not to moving points of interests including people using navigation devices. While there are existing navigation systems, such as Google Latitude and Find My Friends application on Apple iOS that display locations of friends and users in a network, another problem is that their locations cannot be routed to. If a person moves to another location, the existing navigation systems are not updated. Thus, the local navigation route 406 and the remote navigation route 604 updated periodically or dynamically solves these problems.

It has further been discovered that the object indicator 608 of FIG. 6 and the item notification 932 of FIG. 9 provide safety since the object indicator 608 and the item notification 932 provide users an indication of which physical entities are along the local navigation route 406 or the remote navigation route 604. As such, the users do not have to manually inquiry and thus are able to stay focus on driving reducing a chance of getting in to an accident.

It has further been discovered that the presentation layers 702 of FIG. 7 shown in the local augmented reality image 402 and the remote augmented reality image 602 provides safety since the presentation layers 702 are clearly shown thereby relieving the drivers from manually looking up information while driving. The presentation layers 702 are clearly shown using the path signage layer 704 of FIG. 7, the traffic layer 706 of FIG. 7, the bike lane layer 708 of FIG. 7, and the address number layer 710 of FIG. 7.

It has further been discovered that the search dialog box 712 of FIG. 7 in the local augmented reality image 402 and the remote augmented reality image 602 provides improved navigation interface since the search dialog box 712 provides an option for the users to conveniently search for the point of interest 714 of FIG. 7.

It has further been discovered that the follow notification 928 of FIG. 9 provides improved privacy since the remote target 206 is alerted by the follow notification 928 when the remote location 208 is being followed by other users to avoid privacy issues.

It has further been discovered that the turn notification 930 of FIG. 9 provides safety so that the drivers are able to focus driving on the roads while following the remote target 206 since the turn notification 930 provides clear indication of when the remote target 206 turns without having the drivers keeping their eyes on the remote target 206.

It has further been discovered that the traffic condition 1006 and the time-based mode 1008 provides improved calculation of the local navigation route 406 and the remote navigation route 604 since travel paths with accidents or bad traffic conditions are eliminated from calculating the local navigation route 406 and the remote navigation route 604. A problem is that the navigation systems do not take into account traffic conditions to route and reroute users to their destinations. The local navigation route 406 and the remote navigation route 604 rerouted based on the traffic condition 1006 and the time-based mode 1008 solves this problem.

The physical transformation for selecting the remote target 206 to determine the local navigation route 406 from the current location 404 to the remote location 208 of the remote target 206 results in movement in the physical world, such as people using the first device 102 of FIG. 1, the second device 106 of FIG. 1, the third device 108 of FIG. 1, or a combination thereof, based on the operation of the navigation system 100 of FIG. 1. As the movement in the physical world occurs, the movement itself creates additional information that is converted back in to generating the local augmented reality image 402 for the continued operation of the navigation system 100 and to continue the movement in the physical world.

The navigation system 100 describes the module functions or order as an example. The modules can be partitioned differently. For example, the display mode module 906 and the transport mode module 908 can be combined. Each of the modules can operate individually and independently of the other modules.

Furthermore, data generated in one module can be used by another module without being directly coupled to each other. For example, the remote image generation module 920 can receive the follow notification 928 from the notification module 922 of FIG. 9. The selection module 902, the command execution module 904, the display mode module 906, the transport mode module 908, the navigation module 910, the image generation module 916 of FIG. 9, and the notification module 922 can be implemented in as hardware accelerators (not shown) within the first control unit 812, the second control unit 834 of FIG. 8, or the third control unit 852, or can be implemented in as hardware accelerators (not shown) in the first device 102, the second device 106, or the third device 108 outside of the first control unit 812, the second control unit 834, or the third control unit 852. However, it is understood that the first control unit 812, the second control unit 834, the third control unit 852, or a combination thereof can collectively refer to all hardware accelerators for the modules.

The modules described in this application can be implemented as instructions stored on a non-transitory computer readable medium to be executed by the first control unit 812, the second control unit 834 of FIG. 8, the third control unit 852, or a combination thereof. The non-transitory computer medium can include the first storage unit 814 of FIG. 8, the second storage unit 846 of FIG. 8, the third storage unit 854 of FIG. 8, or a combination thereof. The non-transitory computer readable medium can include non-volatile memory, such as a hard disk drive, non-volatile random access memory

(NVRAM), solid-state storage device (SSD), compact disk (CD), digital video disk (DVD), or universal serial bus (USB) flash memory devices. The non-transitory computer readable medium can be integrated as a part of the navigation system 100 or installed as a removable portion of the navigation system 100.

Referring now to FIG. 11, therein is shown a flow chart of a method 1100 of operation of the navigation system 100 of FIG. 1 in a further embodiment of the present invention. The method 1100 includes: selecting a remote target in a block 1102; calculating a current location for locating a device in a block 1104; determining a local navigation route from the current location to a remote location of the remote target for following the remote target in a block 1106; and generating a local augmented reality image with the local navigation route associated with the remote target for displaying on the device in a block 1108.

The local image generation module 918 of FIG. 9 generating the local augmented reality image 402 of FIG. 4 provides improved navigation efficiency for users following the remote target 206 by providing bird's eye view with the local augmented reality image 402 using real images thereby eliminating a chance of the users getting lost. The local augmented reality image 402 also provides safety since the remote target 206 of FIG. 2 does not have to pay attention to the users behind when a group of users are travelling together in a group. Thus, the remote target 206 of FIG. 2 is able to focus on driving. The local augmented reality image 402 also provides safety to users following the remote target 206 since the users are also able to focus on driving.

The local navigation route 406 of FIG. 4 associated with the remote target 206 dynamically updated in real-time provides safety since the drivers can focus on the roads while following the remote target 206 whose location changes from one place to another.

The local overlay path 408 of FIG. 4 and the arrows 410 of FIG. 4 provide safety so that the drivers is able to focus on the roads while following the remote target 206 since the local overlay path 408 and the arrows 410 provide clear turn-by-turn directions. The local overlay path 408 and the arrows 410 prevent mistakes from the drivers of not knowing where they are heading when there are forks in the road and streets that are close to each other.

The local augmented reality image 402 having the cardinal direction 412 of FIG. 4 provides improved navigation efficiency for users following the remote target 206.

The selection module 902 of FIG. 9 selecting the remote target 206 based on the preference 924 of FIG. 9 provides improved efficiency for navigation purposes since the local navigation route 406 and the remote navigation route 604 of FIG. 6 are effectively calculated based on the preference 924 of users using the first device 102 or the third device 108.

The selection module 902 selecting the remote target 206 based on the share setting 926 of FIG. 9 provides safety since only people who are in each other's contact lists or social network are allowed to follow the remote target 206.

The command execution module 904 of FIG. 9 performs a selection of the command menu 210 of FIG. 2 providing improved user interface by providing an option for executing the follow command 212 of FIG. 2, the send message command 214, and the get contact details command 216 of FIG. 2 in order for the first device 102 and the third device 108 to communicate with each other.

The display mode module 906 of FIG. 9 performs an operation based on a selection of the display menu 302 of FIG. 3 providing improved user interface by providing an option for generating the navigation map 204 with clear directions based on the satellite mode 304 of FIG. 3, the map mode 306 of FIG. 3, the traffic mode 308 of FIG. 3, or the augmented reality mode 310 of FIG. 3.

The transport mode module 908 performing an operation based on a selection of the transport menu 312 provides improved navigation estimation since the local navigation route 406 and the remote navigation route 604 are calculated based on an actual mode of transport. The actual mode of transport includes the driving method 314 of FIG. 3, the public transit method 316 of FIG. 3, and the pedestrian method 318 of FIG. 3.

The beacon 502 of FIG. 5 provides improved navigation efficiency for the users following the remote target 206 by indicating the remote location 208 where the remote target 206 is thereby eliminating a chance of the users getting lost.

The remote image generation module 920 of FIG. 9 generating the remote augmented reality image 602 of FIG. 6 provides improved navigation efficiency for the remote target 206 by providing bird's eye view with the remote augmented reality image 602 using real images thereby eliminating a chance of the users getting lost when travelling along the remote navigation route 604.

The remote overlay path 606 of FIG. 6 provides safety so that the remote target 206 is able to focus on the roads while travelling on the remote navigation route 604 since the remote overlay path 606 provides clear navigation directions. The remote overlay path 606 prevent mistakes from the drivers of not knowing which road to take when there are forks in the road and streets that are close to each other.

The local navigation route 406 and the remote navigation route 604 provide improved navigation guidance since the local navigation route 406 and the remote navigation route 604 are updated periodically in increments of seconds or units less than a second thereby providing a dynamic or real-time guidance. A problem is that existing maps and navigation systems display directions to users only via overlaying lines and turn-by-turn cues for static locations and not to moving points of interests including people using navigation devices. While there are existing navigation systems, such as Google Latitude and Find My Friends application on Apple iOS that display locations of friends and users in a network, another problem is that their locations cannot be routed to. If a person moves to another location, the existing navigation systems are not updated. Thus, the local navigation route 406 and the remote navigation route 604 updated periodically or dynamically solves these problems.

The object indicator 608 of FIG. 6 and the item notification 932 of FIG. 9 provide safety since the object indicator 608 and the item notification 932 provide users an indication of which physical entities are along the local navigation route 406 or the remote navigation route 604. As such, the users do not have to manually inquiry and thus are able to stay focus on driving reducing a chance of getting in to an accident.

The presentation layers 702 of FIG. 7 shown in the local augmented reality image 402 and the remote augmented reality image 602 provides safety since the presentation layers 702 are clearly shown thereby relieving the drivers from manually looking up information while driving. The presentation layers 702 are clearly shown using the path signage layer 704 of FIG. 7, the traffic layer 706 of FIG. 7, the bike lane layer 708 of FIG. 7, and the address number layer 710 of FIG. 7.

The search dialog box 712 of FIG. 7 in the local augmented reality image 402 and the remote augmented reality image 602 provides improved navigation interface since the search dialog box 712 provides an option for the users to conveniently search for the point of interest 714 of FIG. 7.

The follow notification 928 of FIG. 9 provides improved privacy since the remote target 206 is alerted by the follow notification 928 when the remote location 208 is being followed by other users to avoid privacy issues.

The turn notification 930 of FIG. 9 provides safety so that the drivers are able to focus driving on the roads while following the remote target 206 since the turn notification 930 provides clear indication of when the remote target 206 turns without having the drivers keeping their eyes on the remote target 206.

The traffic condition 1006 and the time-based mode 1008 provides improved calculation of the local navigation route 406 and the remote navigation route 604 since travel paths with accidents or bad traffic conditions are eliminated from calculating the local navigation route 406 and the remote navigation route 604. A problem is that the navigation systems do not take into account traffic conditions to route and reroute users to their destinations. The local navigation route 406 and the remote navigation route 604 rerouted based on the traffic condition 1006 and the time-based mode 1008 solves this problem.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

## Claims

1. A navigation system (100) comprising:
a location unit (820) configured to calculate a current location (404) for locating a device (102);
a control unit (812) configured to:
select a remote target (206) representing a physical entity whose physical location changes from one geographical location to another geographical location as the physical entity travels along a path;
determine a local navigation route (406) from the current location (404) to a remote location (208) of the remote target (206) for following the remote target (206), where the remote location (208) is a geographical location away from a location where the device (102) is; and
generate a local augmented reality image (402) for displaying on the device (102) with the local navigation route (406) associated with the remote target (206).

2. The system (100) as claimed in claim 1 wherein the control unit (812) is configured to generate the local augmented reality image (402) based on the current location (404).

3. The system (100) as claimed in claim 1 wherein the control unit (812) is configured to generate a remote augmented reality image (602) of the remote location (208).

4. The system (100) as claimed in claim 1 comprising a selection module (902) for selecting the remote target (206) based on opt-in share settings (926) amongst users that are in each other's contacts or social network.

5. The system (100) as claimed in claim 1 wherein the control unit (812) is configured to generate a follow notification for indicating the remote target (206) is being followed.

6. The system (100) as claimed in claim 1 comprising a local image generation module (918) for generating the local augmented reality image (402) with a path signage layer (704).

7. The system (100) as claimed in claim 1 wherein the control unit (812) is configured to generate the local augmented reality image (402) based on the current location (404) with an augmented reality mode selected.

8. The system (100) as claimed in claim 1 wherein the control unit (812) is configured to generate a remote augmented reality image (602) of the remote location (208), the remote augmented reality image (602) having a remote overlay path (606).

9. The system (100) as claimed in claim 1 wherein the control unit (812) is configured to select the remote target (206) based on a share setting and a preference.

10. The system (100) as claimed in claim 5 wherein the control unit (812) is configured to generate an audible follow notification for indicating the remote target (206) is being followed.

11. A method (1100) of operation of a navigation system (100) comprising:
selecting a remote target (206) representing a physical entity whose physical location changes from one geographical location to another geographical location as the physical entity travels along a path;
calculating a current location (404) for locating a device (102);
determining a local navigation route (406) from the current location (404) to a remote location (208) of the remote target (206) for following the remote target (206) where the remote location (208) is a geographical location away from a location where the device (102) is; and
generating a local augmented reality image (402) for displaying on the device (102) with the local navigation route (406) associated with the remote target (206).

12. The method (1100) as claimed in claim 11 further comprising generating a remote augmented reality image (602) of the remote location (208).

13. The method (1100) as claimed in claim 11 wherein selecting the remote target (206) includes selecting the remote target (206) based on opt-in share settings (926) amongst users that are in each other's contacts or social network.

14. The method (1100) as claimed in claim 11 further comprising generating a follow notification for indicating the remote target (206) is being followed.

15. A non-transitory computer readable medium including instructions for causing the execution of the method of claim 11 on a computing device.

## Patentansprüche

1. Navigationssystem (100), umfassend:
eine Ortseinheit (820), die zum Berechnen eines aktuellen Orts (404) zum Lokalisieren eines Geräts (102) konfiguriert ist;
eine Steuereinheit (812), die konfiguriert ist, um:
ein entferntes Ziel (206) auszuwählen, das eine physische Einheit repräsentiert, deren physischer Ort sich von einem geographischen Ort zu einem anderen geographischen Ort ändert, während die physische Einheit sich entlang einer Strecke bewegt;
eine lokale Navigationsroute (406) vom aktuellen Ort (404) zu einem entfernten Ort (208) des entfernten Ziels (206) zum Verfolgen des entfernten Ziels (206) zu bestimmen, wobei der entfernte Ort (208) ein geographischer Ort ist, der von einem Ort entfernt ist, an dem sich das Gerät (102) befindet;
und Generieren eines lokalen Augmented-Reality-Bilds (402) zum Anzeigen auf dem Gerät (102) mit der lokalen Navigationsroute (406) zugeordnet zum entfernten Ziel (206).

2. System (100) nach Anspruch 1, wobei die Steuereinheit (812) konfiguriert ist, um das lokale Augmented-Reality-Bild (402) auf der Grundlage des aktuellen Orts (404) zu generieren.

3. System (100) nach Anspruch 1, wobei die Steuereinheit (812) konfiguriert ist, um ein entferntes Augmented-Reality-Bild (602) des entfernten Orts (208) zu generieren.

4. System (100) nach Anspruch 1, umfassend ein Auswahlmodul (902) zum Auswählen des entfernten Ziels (206) auf der Grundlage von Weitergabezustimmungseinstellungen (926) unter Nutzern, die sich in den Kontakten oder im sozialen Netzwerk voneinander befinden.

5. System (100) nach Anspruch 1, wobei die Steuereinheit (812) konfiguriert ist, um eine Folgebenachrichtigung zum Angeben, dass das entfernte Ziel (206) verfolgt wird, zu generieren.

6. System (100) nach Anspruch 1, umfassend ein lokales Bildgenerierungsmodul (918) zum Generieren des lokalen Augmented-Reality-Bilds (402) mit einer Streckenbeschilderungsschicht (704).

7. System (100) nach Anspruch 1, wobei die Steuereinheit (812) konfiguriert ist, um das lokale Augmented-Reality-Bild (402) auf der Grundlage des aktuellen Orts (404) mit ausgewähltem Augmented-Reality-Modus zu generieren.

8. System (100) nach Anspruch 1, wobei die Steuereinheit (812) konfiguriert ist, um ein entferntes Augmented-Reality-Bild (602) des entfernten Orts (208) zu generieren, wobei das Augmented-Reality-Bild (602) eine entfernte Überlagerungsstrecke (606) aufweist.

9. System (100) nach Anspruch 1, wobei die Steuereinheit (812) konfiguriert ist, um das entfernte Ziel (206) auf der Grundlage einer Weitergabeeinstellung und einer Präferenz auszuwählen.

10. System (100) nach Anspruch 5, wobei die Steuereinheit (812) konfiguriert ist, um eine hörbare Folgebenachrichtigung zum Angeben, dass das entfernte Ziel (206) verfolgt wird, zu generieren.

11. Verfahren (1100) zum Betreiben eines Navigationssystems (100), umfassend:
Auswählen eines entfernten Ziels (206), das eine physische Einheit repräsentiert, deren physischer Ort sich von einem geographischen Ort zu einem anderen geographischen Ort ändert, während die physische Einheit sich entlang einer Strecke bewegt;
Berechnen eines aktuellen Orts (404) zum Lokalisieren eines Geräts (102); Bestimmen einer lokalen Navigationsroute (406) vom aktuellen Ort (404) zu einem entfernten Ort (208) des entfernten Ziels (206) zum Verfolgen des entfernten Ziels (206), wobei der entfernte Ort (208) ein geographischer Ort ist, der von einem Ort entfernt ist, an dem sich das Gerät (102) befindet;
und Generieren eines lokalen Augmented-Reality-Bilds (402) zum Anzeigen auf dem Gerät (102) mit der lokalen Navigationsroute (406) zugeordnet zum entfernten Ziel (206).

12. Verfahren (1100) nach Anspruch 11, ferner umfassend Generieren eines entfernten Augmented-Reality-Bilds (602) des entfernten Orts (208).

13. Verfahren (1100) nach Anspruch 11, wobei das Auswählen des entfernten Ziels (206) das Auswählen des entfernten Ziels (206) auf der Grundlage von Weitergabezustimmungseinstellungen (926) unter Nutzern enthält, die sich in den Kontakten oder im sozialen Netzwerk voneinander befinden.

14. Verfahren (1100) nach Anspruch 11, ferner umfassend das Generieren einer Folgebenachrichtigung zum Angeben, dass das entfernte Ziel (206) verfolgt wird.

15. Nicht-transitorisches computerlesbares Medium, enthaltend Anweisungen zum Bewirken der Ausführung des Verfahrens nach Anspruch 11 auf einem Berechnungsgerät.

## Revendications

1. Système de navigation (100) comprenant :
une unité de localisation (820) configurée pour calculer une localisation actuelle (404) pour la localisation d'un dispositif (102) ;
un module de commande (812) configuré pour :
sélectionner une cible distante (206) représentant une entité physique dont la localisation physique change d'une localisation géographique à une autre localisation géographique lors du déplacement de l'entité physique le long d'un chemin ;
déterminer un itinéraire de navigation local (406) de la localisation actuelle (404) à une localisation distante (208) de la cible distante (206) afin de suivre la cible distante (206), la localisation distante (208) étant une localisation géographique éloignée d'une localisation où se trouve le dispositif (102) ; et
générer une image de réalité augmentée (402) pour l'afficher sur le dispositif (102) avec l'itinéraire de navigation local (406) correspondant à la cible distante (206).

2. Système (100) selon la revendication 1, le module de commande (812) étant configuré pour générer l'image de réalité augmentée (402) d'après la localisation actuelle (404).

3. Système (100) selon la revendication 1, le module de commande (812) étant configuré pour générer une image de réalité augmentée distante (602) de la localisation distante (208).

4. Système (100) selon la revendication 1, comprenant un module de sélection (902) pour la sélection de la cible distante (206) sur la base de paramètres de partage d'acceptation (926) parmi les utilisateurs présents parmi les contacts ou le réseau social les uns des autres.

5. Système (100) selon la revendication 1, le module de commande (812) étant configuré pour générer une notification de poursuite pour indiquer que la cible distante (206) est suivie.

6. Système (100) selon la revendication 1, comprenant un module de génération d'image local (918) pour la génération de l'image de réalité augmentée (402) avec un niveau de signalisation du chemin (704).

7. Système (100) selon la revendication 1, le module de commande (812) étant configuré pour générer l'image de réalité augmentée (402) sur la base de la localisation actuelle (404) avec mode de réalité augmentée sélectionné.

8. Système (100) selon la revendication 1, le module de commande (812) étant configuré pour générer une image de réalité augmentée distante (602) de la localisation distante (208), l'image de réalité augmentée distante (602) possédant un chemin superposé distant (606).

9. Système (100) selon la revendication 1, le module de commande (812) étant configuré pour sélectionner la cible distante (206) sur la base d'un paramètre de partage et d'une préférence.

10. Système (100) selon la revendication 5, le module de commande (812) étant configuré pour générer une notification de poursuite audible pour indiquer que la cible distante (206) est suivie.

11. Méthode (1100) d'utilisation d'un système de navigation (100) comprenant :
la sélection d'une cible distante (206) représentant une entité physique dont la localisation physique change d'une localisation géographique à une autre localisation géographique lors du déplacement de l'entité physique le long d'un chemin ;
le calcul d'une localisation actuelle (404) pour la localisation d'un dispositif (102) ;
la détermination d'un itinéraire de navigation local (406) de la localisation actuelle (404) à une localisation distante (208) de la cible distante (206) afin de suivre la cible distante (206), la localisation distante (208) étant une localisation géographique éloignée d'une localisation où se trouve le dispositif (102) ; et
la génération d'une image de réalité augmentée (402) pour l'afficher sur le dispositif (102) avec l'itinéraire de navigation local (406) correspondant à la cible distante (206).

12. Méthode (1100) selon la revendication 11, comprenant en outre la génération d'une image de réalité augmentée distante (602) de la localisation distante (208).

13. Méthode (1100) selon la revendication 11, la sélection de la cible distante (206) comprenant la sélection de la cible distante (206) sur la base de paramètres de partage d'acceptation (926) parmi les utilisateurs présents parmi les contacts ou le réseau social les uns des autres.

14. Méthode (1100) selon la revendication 11, comprenant en outre la génération d'une notification de poursuite pour indiquer que la cible distante (206) est suivie.

15. Support non transitoire lisible par ordinateur, comprenant des instructions pour engendrer l'exécution de la méthode selon la revendication 11 sur un appareil informatique.
